# EUROPEAN PATENT APPLICATION

(11) **EP 2 192 774 A1**
(43) Date of publication of application: **02.06.2010**
(21) Application number: 08834420.5
(22) Date of filing: 26.09.2008
(51) Int. Cl.: H04N 7/173, H04N 5/44

(54) **DISPLAY DEVICE, DATA TRANSMITTING METHOD IN DISPLAY DEVICE, TRANSMISSION DEVICE, AND DATA RECEIVING METHOD IN TRANSMISSION DEVICE**

(30) Priority: 28.09.2007 JP 2007255937
(71) Applicant: Sony Corporation, Tokyo 108-0075 (JP)
(72) Inventor: KAMON, Hidekazu, Tokyo 108-0075 (JP); KITARU, Katsunori, Tokyo 108-0075 (JP); NAKAJIMA, Yasuhisa, Tokyo 108-0075 (JP)
(74) Representative: Thévenet, Jean-Bruno
(86) International application number: PCT/JP2008/067569
(87) International publication number: WO 2009/041669

(57) **Abstract**

To effectively use a broadcast reception section (tuner) of a display apparatus such as a television receiver. A personal computer (PC) 10 and a television receiver (TV) 30 are interconnected with one HDMI cable (1). For the transmission of a video signal from the PC 10 to the TV (30), a TMDS channel of the HDMI cable (1) is used. A high-speed data line for executing bidirectional communication using a predetermined line (for example, a reserve line, an HPD line) of the HDMI cable is arranged. Stream data obtained in a broadcast reception section (tuner) of the TV 30 is transmitted to the PC 10 by use of the high-speed data line. The PC 10 records the received stream data or executes image synthesis processing and the line by use of the stream data. The PC 10 transmits the video signal after synthesis processing to the TV 30 over a TDMS channel. On the TV 30, a desktop screen, a reproduced image, a web page, and the like are simultaneously displayed along with a television screen.

## Description

### Technical Field

The present invention relates to a display apparatus, a data transmitting method in the display apparatus, a transmission apparatus, and a data receiving method in the transmission apparatus.

In detail, the present invention relates to a display apparatus and so on, the display apparatus displaying a video signal received from an external device via a transmission path or an image based on stream data obtained in a broadcast reception section, in which the stream data obtained in the broadcast reception section is transmitted to the external device by a communication section for bidirectional communication by use of a predetermined line configuring the transmission path, thereby enabling the external device to effectively use the broadcast reception section.

Also, the present invention relates to a transmission apparatus and so on, the transmission apparatus transmitting a video signal to an external device via a transmission path, in which stream data obtained in a broadcast reception section of that external device is received from the external device by a communication section for bidirectional communication by use of a predetermined line configuring the transmission path, thereby effectively using the broadcast reception section of the external device.

### Background Art

Conventionally, in order to enable the recording and viewing of television programs on a personal computer (PC), the installation of an extension board having a tuner function on the personal computer main is required. However, with the downsizing and low pricing of personal computers, the installation of a tuner (broadcast reception section) on personal computers has become difficult.

Recently, HDMI (High Definition Multimedia Interface) has been gaining popularity as a high-speed transmission communications interface configured to transmit at high speeds digital video signals, namely, non-compressed (or baseband) video signals and digital audio signals accompanying the image data from AV (Audio Visual) sources including a DVD (Digital Versatile Disc) recorder and a set-top box to display devices including a television receiver and a projector, for example. Patent Document 1 describes details of the HDMI standard, for example.
Patent Document 1]
   PCT Patent Publication No. WO2002/078336

### Disclosure of Invention

### Technical Problem

The advance in the installation of HDMI on both a television receiver and a personal computer makes it popular to provide connection between the personal computer and the television receiver. In such a situation, it is redundant to install a tuner on both a television receiver and a personal computer.

Also, with low-price personal computers having no tuner, an environment has been required in which television programs can be recorded and viewed. On the other hand, source apparatus having a tuner is also required by a user for executing an operation, a so-called different-channel recording in which, while a program is being viewed on a channel, a program on a different channel is recorded, the realization thereof requiring the installation of two or more units of tuners on the source apparatus, leading to a raised cost thereof.

An object of the present invention is the effective use of a broadcast reception section (tuner) of a television receiver and the like on personal computers and so on.

### Technical Solution

The concept of the present invention lies in a display apparatus having:
a signal receiving section configured to receive a video signal via a transmission path based on a differential signal over a plurality of channels;
a broadcast reception section configured to process a television broadcast signal to obtain stream data of a predetermined program;
an image display section configured to process the video signal received by the signal receiving section or the stream data obtained by the broadcast reception section to display an image;
a communication section configured to execute bidirectional communication by use of a predetermined line consisting the transmission path; and
a data transmitting section configured to transmit the stream data obtained by the broadcast reception section from the communication section to the external device.

The concept of the present invention lies in a transmission apparatus having:
a signal transmitting section configured to transmit a video signal to an external device via a transmission path based on a differential signal over a plurality of channels;
a video signal acquiring/creating section configured to acquire a video signal transmitted from the signal transmitting section or create a video signal;
a communication section configured to execute bidirectional communication by use of a predetermined line configuring the transmission path; and
a signal receiving section configured to receive stream data obtained in a broadcast reception section of the external device from the external device through the communication section.

In the display apparatus, a video signal is received from an external device (transmission apparatus) via a transmission path and an image obtained from this video signal or streaming data obtained in the broadcast receiving section is displayed. In this display apparatus, a communication section for executing bidirectional communication by use of a predetermined line configuring the transmission path is arranged, the stream data obtained by the broadcast receiving section being transmitted from this communication section to an external device.

For example, this transmission of stream data is executed after the transmission of a recording start command to an external device. This allows the recording of this stream data on the side of the external device. It should be noted that the recording start command is transmitted to the external device when the recording is specified by the user. Also, for example, the transmission of stream data is executed when a transmission request comes from the external device. Consequently, if the external device requires stream data, this stream data can be transmitted to this external device.

In the display apparatus, when the use of the broadcast receiving section comes from an external device, an alert associated with the use is displayed. For example, this display is used to enquire the user whether to permit the use or not. Such an alert display can prevent, when the user is viewing a certain channel program, abrupt channel switching for using an external device.

Also, in the display apparatus, when a request comes from an external device for the channel setting of the broadcast receiving section, the switching of the receiving channel of the broadcast receiving section is executed. Consequently, the external device can obtain the stream data of a desired channel (program).

In the transmission apparatus, a video signal is transmitted to an external device (display apparatus) via a transmission path. Also, in the transmission apparatus, a communication section for executing bidirectional communication by use of a predetermined line configuring the transmission path is arranged. And, in the transmission apparatus, the stream data obtained by the broadcast receiving section of the external device is received by this communication section.

The received stream data is recorded to a predetermined recording media, for example. It should be noted that this recording is started when a recording start command comes from the external device. Consequently, the recording by the specification from an external device is made practicable.

For example, various kinds of request signals are transmitted from the transmission apparatus to an external device. These request signals include a request signal for requesting the use of the broadcast receiving section of the external device. The transmission apparatus may be configured so as not to execute the channel setting of the broadcast receiving section if no permission response for the request comes from the external device.

Also, the request signals include a request signal for requesting the channel setting of the broadcast receiving section of an external device, for example. By this request signal, the transmission apparatus can switch the reception channel of the broadcast receiving section of the external device to a necessary channel. Further, the request signals include a request signal for requesting the transmission of stream data, for example. By this request signal, the transmission apparatus can receive stream data as required.

Also, in the transmission apparatus, a signal acquiring/creating section for acquiring or creating a video signal to be transmitted to an external device is arranged. This signal acquiring/creating section is a video signal reproducing section for reproducing a video signal from a recording media or a web browser that acquires an image from the Internet and generates a video signal for displaying a web page or a generating section of a video signal for displaying a desktop screen.

In the transmission apparatus, for example, processing is executed for synthesizing the stream data received by the communication section with a video signal acquired or generated by the above-mentioned acquiring/creating section. In this case, in the external device, an imaged based on stream data can be displayed along with a reproduced image or a web page or desktop screen at the same time.

In this invention, a configuration is provided in which stream data obtained by the broadcast receiving section of the display apparatus is transmitted to the transmission section via a bidirectional communication line, thereby allowing the effective use of the broadcast receiving section of the display apparatus in the transmission apparatus.

### Advantageous Effect

According to the present invention, in a display apparatus for displaying a video signal received from an external device via a transmission path or an image based on stream data obtained in a broadcast reception section, the stream data obtained in the broadcast reception section is transmitted to the external device by a communication section for bidirectional communication by use of a predetermined line configuring the transmission path, thereby enabling the external device to effectively use the broadcast reception section.

Also, according to the present invention, in a transmission apparatus for transmitting a video signal to an external device via a transmission path, stream data obtained in a broadcast reception section of the external device is received from the external device by a communication section for bidirectional communication by use of a predetermined line configuring the transmission path, thereby effectively using the broadcast reception section of the external device.

### Brief Description of Drawings

FIG. 1 is a block diagram illustrating an exemplary configuration of an AV system practiced as one embodiment of the invention.
FIG. 2 is a block diagram illustrating an exemplary configuration of a personal computer (or a source device) constituting the AV system.
FIG. 3 is a block diagram illustrating an exemplary configuration of a television receiver (or a sink device) constituting the AV system.
FIG. 4 is a block diagram illustrating exemplary configurations of an HDMI transmission section (or an HDMI source) and an HDMI reception section (HDMI sink).
FIG. 5 is a block diagram illustrating exemplary configurations of an HDMI transmitter and an HDMI receiver.
FIG. 6 is a schematic diagram illustrating a structure of TMDS transmission data.
FIG. 7 is a schematic diagram illustrating a pin arrangement (type A) of an HDMI terminal.
FIG. 8 is a connection diagram illustrating an exemplary configuration of a high-speed data line interface for the personal computer and the television receiver.
FIG. 9 shows an example of an operation sequence to be executed when the user instructs recording through the remote control transmitter of the television receiver.
FIG. 10 shows one example of an operation sequence to be executed when the user instructs reproduction through the remote control transmitter of the television receiver.
FIG. 11 shows one example of an operation sequence to be executed when the personal computer requests the television receiver for the transmission of a partial TS of a predetermined program to execute recording processing.
FIG. 12 shows one example of an operation sequence to be executed when the personal computer requests the television receiver for the transmission of a partial TS of a predetermined program to execute synthesis processing.
FIG. 13 shows an image display example based on the video signal after synthesis processing.
FIG. 14 is a connection diagram illustrating another exemplary configuration of a high-speed data line interface of the personal computer and the television receiver.
FIG. 15 is a connection diagram illustrating still another exemplary configuration of a high-speed data line interface of the personal computer and the television receiver.
FIG. 16 is a schematic diagram illustrating a structure of E-EDID to be received by the source device.
FIG. 17 is a schematic diagram illustrating a structure of E-EDID Vendor-Specific Data Block.
FIG. 18 is a flowchart indicative of communication processing by the source device.
FIG. 19 is a flowchart indicative of communication processing by the sink device.
FIG. 20 is a flowchart indicative of communication processing by the source device.
FIG. 21 is a flowchart indicative of communication processing by the sink device.
FIG. 22 is a connection diagram illustrating another exemplary configuration of a high-speed data line interface of the personal computer and the television receiver.
FIG. 23 is a flowchart indicative of communication processing by the source device.
FIG. 24 is a flowchart indicative of communication processing by the sink device.
FIG. 25 is a block diagram illustrating an exemplary configuration of a computer to which the present invention is applied.
FIG. 26 is a connection diagram illustrating still another exemplary configuration of a high-speed data line interface of the personal computer and the television receiver.
FIG. 27 is waveform diagram illustrating bidirectional communication waveforms.

### Explanation of Reference

1 ... HDMI cable, 5 ... AV system, 10 ... Personal computer, 11 ... HDMI terminal, 12 ...HDMI transmission section, 12A ... High-speed data line interface, 13 ... CPU, 22 ... Ethernet interface, 30 ...Television receiver, 31 ... HDMI terminal, 32 ...HDMI reception section, 32A ... High-speed data line interface, 42 ... Display panel, 52 ... CPU, 54 ... Ethernet interface, 57 ... Remote control transmitter, 210 ... Internet

### Best mode for Carrying Out the Invention

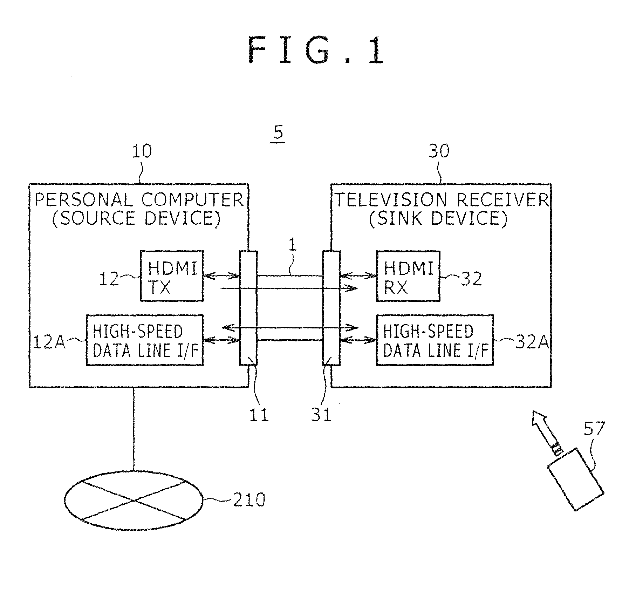

The present invention will be described in further detail by way of embodiments thereof with reference to the accompanying drawings. Now, referring to FIG. 1, there are shown exemplary configurations of an AV (Audio Visual) system 5 practiced as one embodiment of the invention.

The AV system 5 has a personal computer (PC) 10 as a source device and a television receiver 30 as a sink device. The personal computer 10 and the television receiver 30 are interconnected with an HDMI cable 1. The personal computer 10 is connected to the Internet 210.

The personal computer 10 has an HDMI terminal 11 connected with an HDMI transmission section (HDMI TX) 12 and a high-speed data line interface 12A. The television receiver 30 has HDMI terminals 31 connected with HDMI reception sections (HDMI RX) 32 and high-speed data line interface 32A. One end of the HDMI cable 1 is connected to the HDMI terminal 11 of the personal computer 10 and one end of the HDMI cable 1 is connected to the HDMI terminal 31 of the television receiver 30.

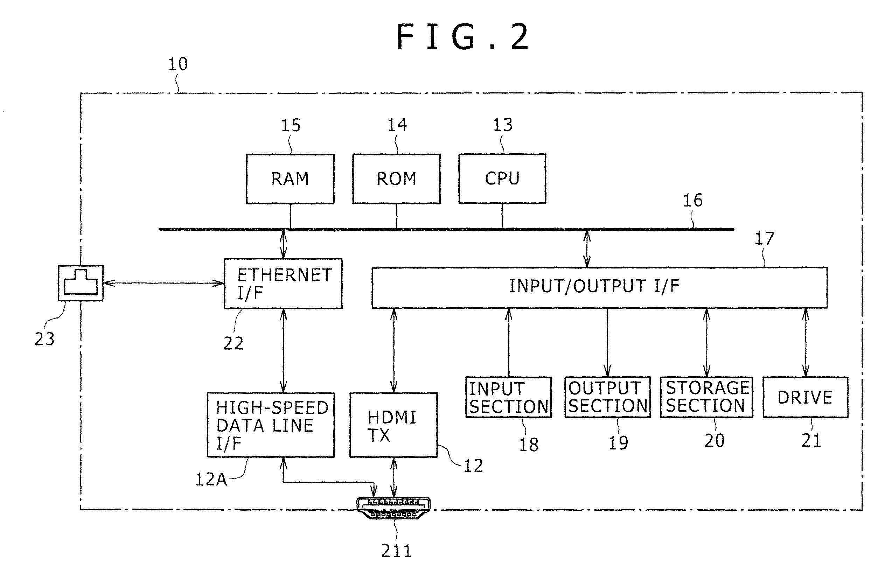

FIG. 2 shows an exemplary configuration of the personal computer 10.

The personal computer 10 has the HDMI terminal 11, the HDMI transmission section 12, the high-speed data line interface 12A, a CPU (Central Processing Unit) 13, a ROM (Read Only Memory) 14, a RAM (Random Access Memory) 15, a bus 16, an input/output interface 17, an input section 18, an output section 19, a storage section 20, a drive 21, an Ethernet interface (I/F) 22, and a network terminal 23. It should be noted that "Ethernet" is a registered trademark.

With the personal computer 10, the CPU 13, the ROM 14, and the RAM 15 are interconnected via the bus 16. Further, the bus 16 is connected with the input/output interface 17. The input/output interface 17 is connected with the input section 18, the output section 19, the storage section 20, the drive 21, and the HDMI transmission section 12.

The input section 18 is made up of a keyboard, a mouse, and a microphone, or the like. The output section 19 is made up of a display, and a loudspeaker, or the like. The storage section 20 is made up of a HDD (Hard Disk Drive), a nonvolatile memory, or the like. The drive 21 is configured to drive a magnetic disk, an optical disk, a magneto-optical disk, a memory card, and other removable media.

The bus 16 is connected with the Ethernet interface 22. The Ethernet interface 22 is connected with the network terminal 23 and the high-speed data line interface 12A. The high-speed data line interface 12A is a bidirectional interface that uses a predetermined line (a reserved line or an HPD line in this embodiment) making up the HDMI cable. Details of this high-speed data line interface 12A will be described later.

With the personal computer 10 configured as shown in FIG. 2, the CPU 13 loads a program stored in the storage section 20 into the RAM 15 via the input/output interface 17 and the bus 16 and executes the loaded program, thereby executing a series of processing operations to be described later.

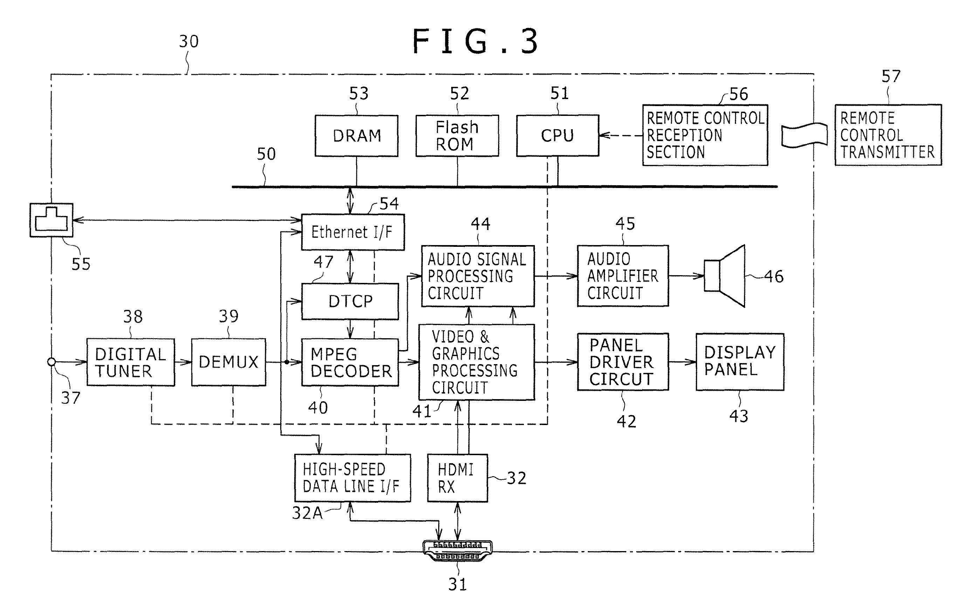

FIG. 3 shows an exemplary configuration of the television receiver 30. The television receiver 30 has HDMI terminals 31, HDMI reception sections 32, high-speed data line interfaces 32A, an antenna terminal 37, a digital tuner 38, a demultiplexer 39, an MPEG (Moving Picture Expert Group) decoder 40, a video & graphics processing circuit 41, a panel driver circuit 42, a display panel 43, an audio signal processing circuit 44, an audio amplifier circuit 45, a loudspeaker 46, a DTCP circuit 47, an internal bus 50, a CPU 51, a flash ROM 52, a DRAM 53, an Ethernet interface (I/F) 54, a network terminal 55, a remote control reception section 56, and a remote control transmitter 57.

The antenna terminal 37 is a terminal at which a television broadcast signal received by an reception antenna (not shown) is entered. The digital tuner 38 processes the television broadcast signal received through the antenna terminal 37 and outputs a predetermined transport stream corresponding to a user-selected channel. The demultiplexer 39 extracts a partial TS (Transport Stream) (namely, a TS packet of video data and a TS packet of audio data) corresponding to the user-selected channel from the transport stream obtained by the digital tuner 38.

The demultiplexer 39 also extracts PSI/SI (Program Specific Information/Service Information) from the transport stream obtained by the digital tuner 38 and outputs the extracted PSI/SI to the CPU 51. The transport stream obtained by the digital tuner 38 is multiplexed with two or more channels. The processing of extracting a partial TS on a given channel from the transport stream by the demultiplexer 39 is enabled by obtaining the packet ID (PID) information of that channel from the PSI/SI (PAT/PMT).

The MPEG decoder 40 executes decoding on a video PES (Packetized Elementary Stream) packet made up of a TS packet of video data obtained by the demultiplexer 39, thereby obtaining video data. Also, the MPEG decoder 40 executes decoding on an audio PES packet made up of a TS packet of audio data obtained by the demultiplexer 39, thereby obtaining audio data. It should be noted that the MPEG decoder 40 executes decoding on the video and audio PES packets decoded by the DTCP circuit 47, thereby obtaining video and audio data, as required.

The video & graphics processing circuit 41 executes multiscreen processing and graphics data superimposition processing on the video data obtained by the MPEG decoder 40, as required. The panel driver circuit 42 drives the display panel 43 on the basis of the audio data outputted from the video & graphics processing circuit 41. The display panel 43 is made up of an LCD (Liquid Crystal Display), a PDP (Plasma Display Panel), or the like. The audio signal processing circuit 44 executes D/A conversion and other necessary processing on the audio data obtained in the MPEG decoder 40. The audio amplifier circuit 45 amplifies an audio signal outputted from the audio signal processing circuit 44 and supplies the obtained audio signal to the loudspeaker 46.

The DTCP circuit 47 encrypts the partial TS extracted by the demultiplexer 39. In addition, the DTCP circuit 47 decrypts the encrypted data supplied from the network terminal 55 or the high-speed data line interface (I/F) 253 to the Ethernet interface 54.

The CPU 51 controls the operation of each component of the television receiver 30. The flash ROM 52 stores control software and data. The DRAM 53 constitutes a work area for use by the CPU 51. The CPU 51 expands the software and data read from the flash ROM 52 into the DRAM 53 to start the software, thereby controlling each component of the television receiver 30. The remote control reception section 56 receives a remote control signal (a remote control code) supplied from the remote control transmitter 57 and supplies the received signal to the CPU 51. The CPU 51, the flash ROM 52, the DRAM 53, and the Ethernet interface 54 are connected to the internal bus 50.

The HDMI reception sections (HDMI sink) 32 receive baseband video (image) data and audio data supplied to the HDMI terminals 31. Details of these HDMI reception sections 32 will be described later. The high-speed data line interfaces 32A provide bidirectional communication interfaces by use of a predetermined line (the reserved line and the HDMI cable in this embodiment) constituting the HDMI cable. Details of these high-speed data line interfaces 32A will be described later.

The following briefly describes an operation of the television receiver 30 shown in FIG. 3.

A television broadcast signal entered in the antenna terminal 37 is supplied to the digital tuner 38. The digital tuner 38 processes the received television signal to output a predetermined transport stream corresponding to a user-specified channel. This transport stream is supplied to the demultiplexer 39. The demultiplexer 39 extracts, from the supplied transport stream, a partial TS (a video data TS packet and an audio data TS packet) corresponding to the user-specified channel, supplying the extracted partial TS to the MPEG decoder 40.

The MPEG decoder 40 decodes the video PES packet made up of the video data TS packet to provide video data. The video & graphics processing circuit 41 executes multiscreen processing and graphics data superimposition processing on this video data, supplying the processed video data to the panel driver circuit 42. Consequently, an image corresponding to the user-specified channel is displayed on the display panel 43.

Also, the MPEG decoder 40 decodes the audio PES packet made up of the audio data TS packet, thereby obtaining audio data. The audio signal processing circuit 44 executes necessary processing, such as D/A conversion, on this audio data. The audio amplifier circuit 45 amplifies the processed audio data and supplies the amplified audio data to the loudspeaker 46. Consequently, the sound corresponding to the user-specified channel is outputted from the loudspeaker 46.

In transmitting the partial TS extracted by the demultiplexer 39 to a network or a high-speed data line configured by a predetermined line of an HDMI cable to be described later at the time of receiving a television broadcast signal, this partial TS is encrypted by the DTCP circuit 47 before being supplied to the network terminal 55 or the high-speed data line interfaces 32A via the Ethernet interface 54.

The remote control reception section 56 receives a remote control code (a remote control signal) from the remote control transmitter 57 and supplies the received remote control code to the CPU 51. The CPU 51 controls the television receiver 30 as specified by this remote control code.

The encrypted partial TS that is supplied from the network terminal 55 to the Ethernet interface 54 or from the HDMI terminals 31 to the Ethernet interface 54 via the high-speed data line interfaces 32A is decoded by the DTCP circuit 47 to be supplied to the MPEG decoder 40. Subsequently, the same operation as at the above-mentioned reception of television broadcast signal takes place, in which the image is displayed on the display panel 43 and the sound is outputted from the loudspeaker 46.

The HDMI reception sections 32 obtain video (image) data and audio data that are entered in the HDMI terminals 31 via the HDMI cable. These video data and audio data are supplied to the video & graphics processing circuit 41 and the audio signal processing circuit 44, respectively. Subsequently, the same operation as at the above-mentioned reception of television broadcast signal takes place, in which the image is displayed on the display panel 43 and the sound is outputted from the loudspeaker 46.

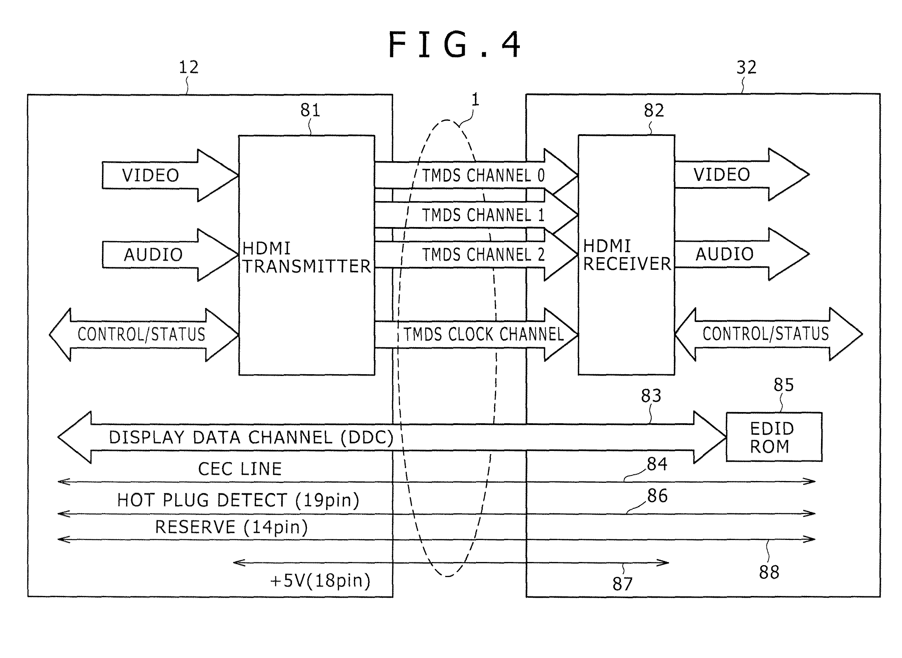

Referring to FIG. 4, there are shown exemplary configurations of the HDMI transmission section 12 (HDMI source) of the personal computer 10 and the HDMI reception section 32 (HDMI sink) of the television receiver 30 in the AV system 5 shown in FIG. 1.

The HDMI source 12 unidirectionally transmits a differential signal corresponding to pixel data of an image for one non-compressed screen to the HDMI sink 32 on a two or more channels in an effective image interval (hereafter referred to as an active video interval) obtained by removing a horizontal blanking interval and a vertical blanking interval from an interval between one vertical sync signal to the following vertical sync signal and, at the same time, unidirectionally transmits a differential signal corresponding to at least audio data and control data accompanying the image and other auxiliary data to the HDMI sink 32 on two or more channels in a horizontal blanking interval or a vertical blanking interval.

Namely, the HDMI source 12 has a transmitter 81. The transmitter 81 converts baseband pixel data of an image into corresponding differentials signal and unidirectionally serial transmits the differential signals to the HDMI sink 32 via the HDMI cable 1 over three TMDS channels #0, #1, and #2.

Further, the transmitter 81 converts the audio data accompanying a baseband image, necessary control data, and other auxiliary data into corresponding differential signals and transmits the differential signals to the HDMI sink 32 connected via the HDMI cable 1 over the three TMDS channels #0, #1, and #2.

In addition, the transmitter 81 transmits a pixel clock synchronized with pixel data to be transmitted over the three TMDS channels #0, #1, and #2 to the HDMI sink 32 connected via the HDMI cable 1 over a TMDS clock channel. It should be noted that, on one TMDS channel #i (i = 0, 1, 2), pixel data of 10 bits is transmitted in one pixel clock.

In an active video interval, the HDMI sink 32 receives a differential signal corresponding to pixel data unidirectionally transmitted from the HDMI source 12 over two or more channels in an active video interval and, at the same time, receives a differential signal corresponding to audio data and control data unidirectionally transmitted from the HDMI source 12 over two or more channels in a horizontal blanking interval or a vertical blanking interval.

Namely, the HDMI sink 32 has a receiver 82. The receiver 82 receives a differential signal corresponding to pixel data and a differential signal corresponding to audio data and control data unidirectionally transmitted from the HDMI source 12 connected via the HDMI cable 1 over the TMDS channels #0, #1, and #2, in synchronization with a pixel clock transmitted from the HDMI source 12 over the TMDS clock channel.

The transmission channels of the HDMI system based on the HDMI source 12 and the HDMI sink 32 include the three TMDS channels #0 through #2 for unidirectionally serial transmitting pixel data and audio data in synchronization with a pixel clock to the HDMI source 12 and the HDMI sink 32, the TMDS clock channel for transmitting a pixel clock, and transmission channels referred to as a DDC (Display Data Channel) 83 and a CEC line 84.

The DDC 83 is made up of two signal lines, not shown, included in the HDMI cable 1 and is used for the HDMI source 12 to read E-EDID (Enhanced Extended Display Identification Data) from the HDMI sink 32 connected via the HDMI cable 1.

Namely, in addition to the transmitter 81, the HDMI sink 32 has an EDID ROM 85 that stores E-EDID that is performance information associated with the configuration/capability of the HDMI sink 32 itself. The HDMI source 12 reads, via the DDC 83, the E-EDID of the HDMI sink 32 from the HDMI sink 32 connected via the HDMI cable 1 and, on the basis of this E-EDID, recognizes the setting of the performance of the HDMI sink 32, namely, a format (or a profile) of an image to which an electronic device having the HDMI sink 32 corresponds, RGB, YCbCr4:4:4, and YCbCr4:2:2, for example.

The CEC line 84 is made up of one signal line, not shown, included in the HDMI cable 1 and is used for the bidirectional control data communication between the HDMI source 12 and the HDMI sink 32.

The HDMI cable 1 also includes a line 86 that is connected to a pin referred to as HPD (Hot Plug Detect). By use of the line 86, each source device can detect the connection of each sink device. In addition, the HDMI cable 1 includes a line 87 that is used to supply power from the source device to the sink device. Further, the HDMI cable 1 includes a reserved line 88.

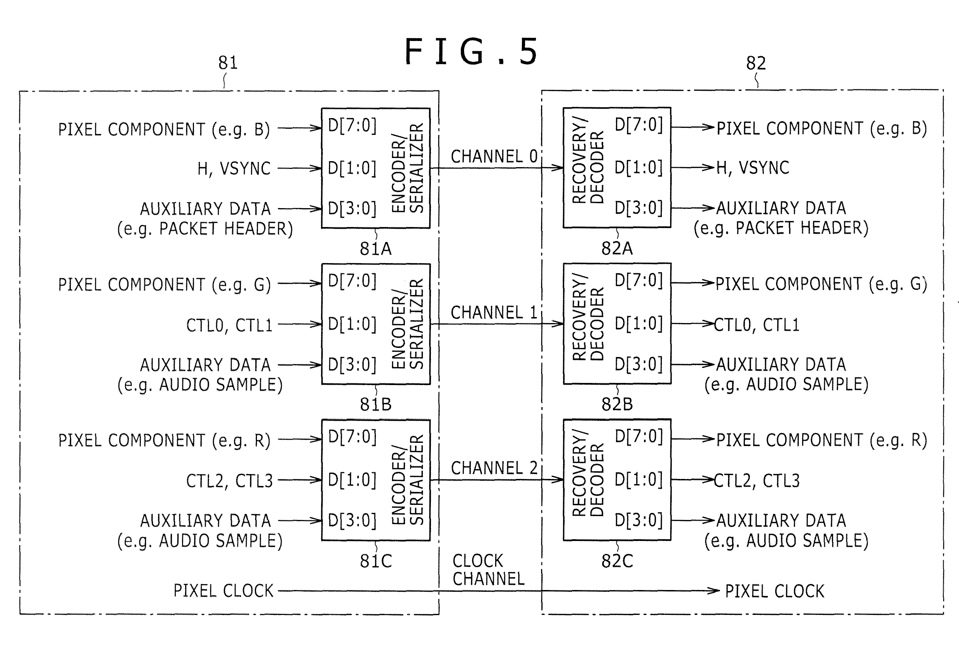

FIG. 5 shows an exemplary configuration of the HDMI transmitter 81 and the HDMI receiver 82 shown in FIG. 4.

The transmitter 81 has three encoders/serializers 81A, 81B, and 81C corresponding to the three TMDS channels #0, #1, and #2, respectively. Each of the three encoders/serializers 81A, 81B, and 81C encodes image data, auxiliary data and control data supplied thereto to covert these data from parallel to serial, the resultant data being transmitted by differential signals. If the image data has three components, R (Red), G (Green), and B (Blue), for example, the B component is supplied to the encoder/serializer 81A, the G component to the encoder/serializer 81B, and the R component to the encoder/serializer 81C.

The auxiliary data include audio data and control packet data, for example. The control packet data is supplied to the encoder/serializer 81A and the audio data is supplied to the encoder/serializer 81B and encoder/serializer 81C.

Further, the control data include a 1-bit vertical sync signal (VSYNC), a 1-bit horizontal sync signal (HSYNC), and 1-bit control signals CTL0, CTL1, CTL2, and CTL3. The vertical sync signal and the horizontal sync signal are supplied to the encoder/serializer 81A. The control bits CTL0 and CTL1 are supplied to the encoder/serializer 81B. The control bits CTL2 and CTL3 are supplied to the encoder/serializer 81C.

The encoder/serializer 81A transmits, in a time division manner, B component of the supplied image data, the supplied vertical sync signal and horizontal sync signal, and the supplied auxiliary data. Namely, the encoder/serializer 81A converts B component of the image data supplied thereto into 8-bit parallel data that is the fixed number of bits. Further, the encoder/serializer 81A encodes this parallel data into serial data and transmits the serial data over TMDS channel #0.

Also, the encoder/serializer 81A encodes 2-bit parallel data of a vertical sync signal and a horizontal sync signal supplied thereto into serial data and transmits this serial data over TMDS channel #0. In addition, the encoder/serializer 81A converts auxiliary data supplied thereto into 4-bit parallel data. Then, the encoder/serializer 81A encodes and converts this parallel data into serial data and transmits this serial data over TMDS channel #0.

The encoder/serializer 81B transmits, a time division manner, G component of image data, control bits CTL0, CTR1, and auxiliary data supplied thereto. Namely, the encoder/serializer 81B converts G component of the image data supplied thereto into 8-bit parallel data that is the fixed number of bits. Further, the encoder/serializer 81B encodes and converts this parallel data into serial data and transmits the serial data over TMDS channel #1.

The encoder/serializer 81B encodes and converts 2-bit parallel data of control bits CTL0 and CTL1 into serial data and transmits this serial data over TMDS channel #1. Further, the encoder/serializer 81B converts the auxiliary data supplied thereto into 4-bit parallel data. Then, the encoder/serializer 81B encodes and converts this parallel data into serial data and transmits this serial data over the TMDS channel #1.

The encoder/serializer 81C transmits, in a time division manner, R component of image data, control bits CTL2, CTL3, and auxiliary data supplied thereto. Namely, the encoder/serializer 81B converts R component of the image data supplied thereto into 8-bit parallel data that is the fixed number of bits. Further, the encoder/serializer 81C encodes and converts this parallel data into serial data and transmits the serial data over TMDS channel #2.

The encoder/serializer 81C encodes and converts 2-bit parallel data of control bits CTL2 and CTL3 into serial data and transmits this serial data over TMDS channel #2. Further, the encoder/serializer 81C converts the auxiliary data supplied thereto into 4-bit parallel data. Then, the encoder/serializer 81C encodes and converts this parallel data into serial data and transmits this serial data over the TMDS channel #2.

The receiver 82 has three recoveries/decoders 82A, 82B, and 82C corresponding to three TMDS channels #0, #1, and #2, respectively. Each of the recoveries/decoders 82A, 82B, and 82C receives image data, auxiliary data, and control data transmitted by differential signals over TMDS channels #0, #1, and #2. Further, each of the recoveries/decoders 82A, 82B, and 82C converts the received image data, auxiliary data, and control data from serial to parallel and decodes the resultant parallel data, outputting the decoded data.

Namely, the recovery/decoder 82A receives B component of image data, a vertical sync signal, horizontal sync signal, and auxiliary data transmitted by differential signals over TMDS channel #0. Then, the recovery/decoder 82A converts these B component of image data, vertical sync signal, horizontal sync signal, and auxiliary data from serial to parallel and decodes the parallel data, outputting the decoded data.

The recovery/decoder 82B receives G component of image data, control bit CTL0, control bit CTL1, and auxiliary data transmitted by differential signals over TMDS channel #1. Then, the recovery/decoder 82B converts these G component of image data, control bit CTL0 control bit CTL1, and auxiliary data from serial to parallel and decodes the parallel data, outputting the decoded data.

The recovery/decoder 82C receives R component of image data, control bit CTL2, control bit CTL3, and auxiliary data transmitted by differential signals over TMDS channel #2. Then, the recovery/decoder 82C converts these R component of image data, control bit CTL2, control bit CTL3, and auxiliary data from serial to parallel and decodes the parallel data, outputting the decoded data.

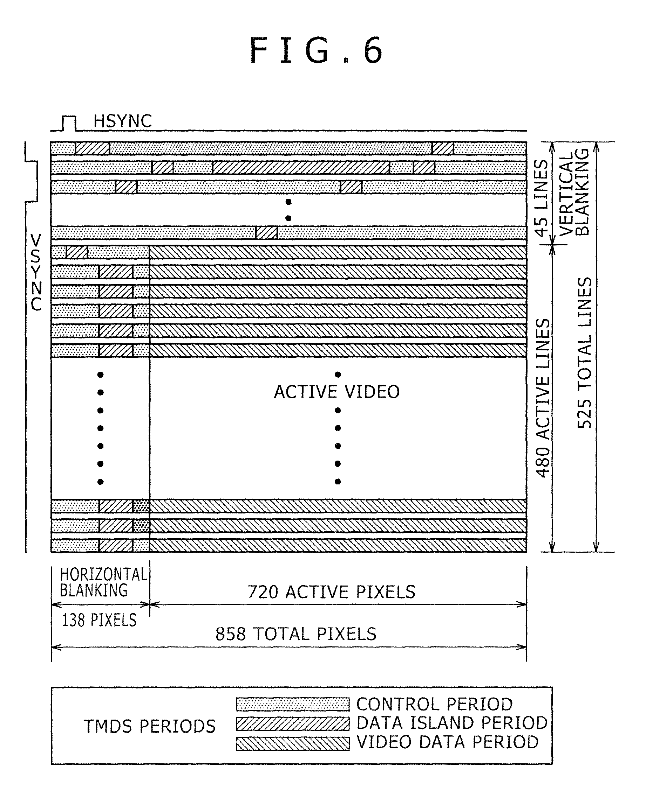

FIG. 6 shows an example of transmission periods in which various kinds of transmission data are transmitted over the three TMDS channels of HDMI. It should be noted that FIG. 6 shows periods of various kinds of transmission data in the case where a progressive image of 720 (wide) x 480 (high) pixels is transmitted over TMDS channels #0, #1, and #2.

A video field in which transmission data is transmitted over the three TMDS channels #0, #1, and #2 of HDMI has three kinds of periods, a video data period, a data island period, and a control period depending on the type of transmission data.

The video field period is a period between the active edge of a vertical sync signal to the active edge of the next vertical sync signal. The video field period is divided into a horizontal blanking, a vertical blanking, and an active video period obtained by removing horizontal blanking and vertical blanking from the video field period.

The video data period is allocated to the active video period. In this video data period, data made up of active pixels for 720 pixels x 480 lines making up the image data for one baseband screen is transmitted.

A data island period and a control period are allocated to horizontal blanking and vertical blanking. In the data island period and a control period, auxiliary data is transmitted.

Namely, a data island period is allocated to parts of horizontal blanking and vertical blanking. In this data island period, of the auxiliary data, the data not associated with control, such as an audio data packet for example, is transmitted.

The control period is allocated to other parts of horizontal blanking and vertical blanking. In this control period, of the auxiliary data, the data associated with control, such as a vertical sync signal, a horizontal sync signal, and a control packet, is transmitted.

In the current HDMI standard, the frequency of a pixel clock transmitted on the TMDS clock channel is 165 MHz for example; in this case, the transfer rate of the data island period is approximately 500 Mbps.

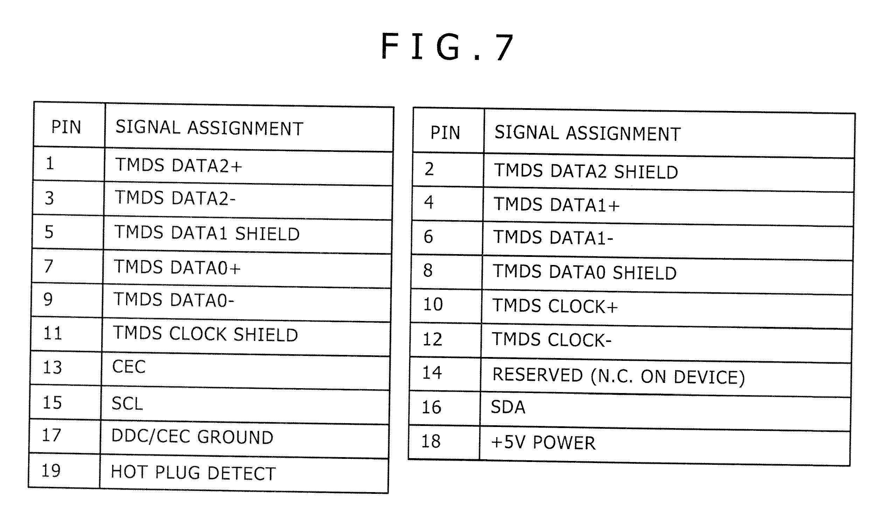

FIG. 7 shows a pin arrangement of HDMI terminals 11, 31. This pin arrangement is called a type-A pin arrangement.

Two differential lines along which TMDS Data #i+ and TMDS Data #i-, differential signals of TMDS channel #i, are transmitted are connected to pins (pin numbers 1, 4, and 7) to which TMDS Data #i+ is allocated and pins (pin numbers 3, 6, and 9) to which TMDS Data #i- is allocated.

The CEC line 84 along which a CEC signal that is data for control is transmitted is connected to a pin whose pin number is 13. A pin whose pin number is 14 is a reserved pin. A line along which an SDA (Serial Data) signal, such as E-EDID, is transmitted is connected to a pin whose pin number is 16. A line along which an SCL (Serial Clock) signal that is a clock signal for use in synchronization at the time of SDA signal transmission or reception is transmitted is connected to a pin whose pin number is 15. The above-mentioned DDC 83 is made up of the line along which a SDA signal is transmitted and the line along which an SCL signal is transmitted.

As described above, the line 86 for a source device to detect the connection of a sink device is connected to a pin whose pin number is 19. Further, as described above, the line 87 for supplying power is connected to a pin whose pin number is 18.

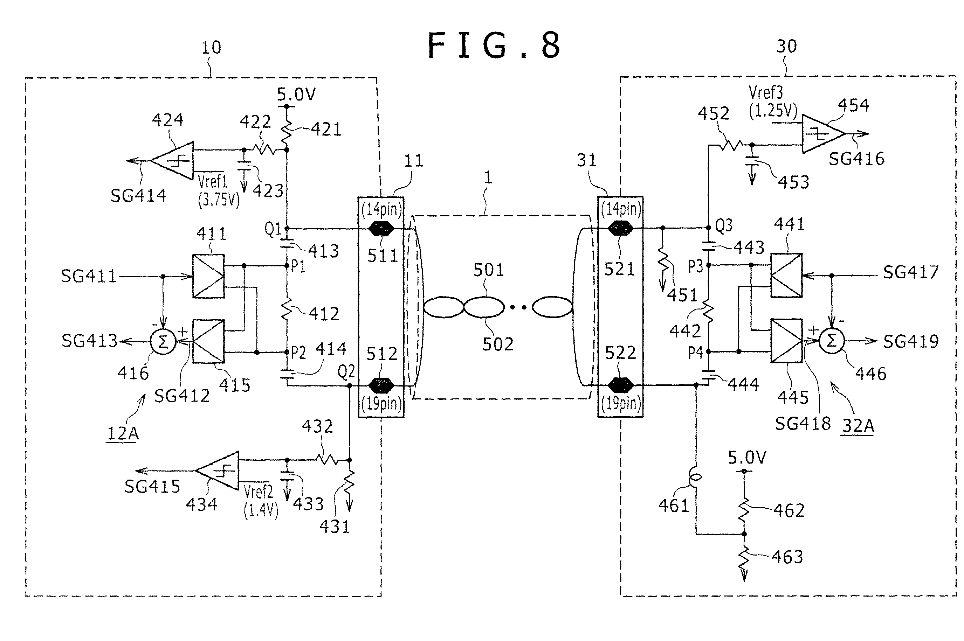

Referring to FIG. 8 there are shown exemplary configurations of the high-speed data line interface 12A of the personal computer 10 and the high-speed data line interface 32A of the television receiver 30 in the AV system 5 shown in FIG. 1. These interfaces 12A, 32A constitute a communication section configured to execute LAN (Local Area Network) communication. This communication section executes communication by use of a pair of differential lines of two or more lines constituting the HDMI cable 1, namely, the reserved line (Ethernet - line) corresponding to the reserved pin (pin 14) and the HPD line (Ethernet + line) corresponding to the HPD pin (pin 19).

The personal computer 10 has a LAN signal transmission circuit 411, a terminal resistor 412, AC coupling capacitors 413, 414, a LAN signal reception circuit 415, a subtraction circuit 416, a pullup resistor 421, a resistor 422 and a capacitor 423 making up a lowpass filter, a comparator 424, a pulldown resistor 431, a resistor 432 and a capacitor 433 making up a lowpass filter, and a comparator 434. The high-speed data line interface 12A is made up of the LAN signal transmission circuit 411, the terminal resistor 412, the AC coupling capacitors 413, 414, the LAN signal reception circuit 415, and the subtraction circuit 416.

A series circuit of the pullup resistor 421, the AC coupling capacitor 413, the terminal resistor 412, the AC coupling capacitor 414, and the pulldown resistor 431 is connected between a power supply line (+5.0 V) and a ground line. A connection point P1 shared by the AC coupling capacitor 413 and the terminal resistor 412 is connected to the positive output side of the LAN signal transmission circuit 411 and the positive input side of the LAN signal reception circuit 415. A connection point P2 shared by the AC coupling capacitor 414 and the terminal resistor 412 is connected to the negative output side of the LAN signal transmission circuit 411 and the negative input side of the LAN signal reception circuit 415. To the input side of the LAN signal transmission circuit 411, a transmission signal (transmission data) SG411 is supplied.

The positive terminal of the subtractor 416 is supplied with output signal SG412 of the LAN signal reception circuit 415 and the negative terminal of this subtractor 416 is supplied with transmission signal (transmission data) SG411. The subtractor 416 subtracts the transmission signal SG411 from the output signal SG412 of the LAN signal reception circuit 415 to provide reception signal (reception data) SG413.

A connection point Q1 shared by the pullup resistor 421 and the AC coupling capacitor 413 is connected to the ground line via a series circuit of the resistor 422 and the capacitor 423. An output signal of a lowpass filter formed at the connection point between the resistor 422 and the capacitor 423 is supplied to one input terminal of the comparator 424. The comparator 424 compares the output signal of the lowpass filter with reference voltage Vref1 (+3.75 V) to be supplied to the other input terminal. Output signal SG414 of the comparator 424 is supplied to the CPU 13.

A connection point Q2 shared by the AC coupling capacitor 414 and the pulldown resistor 431 is connected to the ground line via a series circuit of the resistor 432 and the capacitor 433. An output signal of a lowpass filter formed at the connection point between the resistor 432 and the capacitor 433 is supplied to one input terminal of the comparator 434. The comparator 434 compares the output signal of the lowpass filter with reference voltage Vref2 (+1.4 V) to be supplied to the other input terminal. Output signal SG415 of the comparator 434 is supplied to the CPU 13.

The television receiver 30 has a LAN signal transmission circuit 441, a terminal resistor 442, AC coupling capacitors 443, 444, a LAN signal reception circuit 445, a subtraction circuit 446, a pulldown resistor 451, a resistor 452 and a capacitor 453 making up a lowpass filter, a comparator 454, a choke coil 461, a resistor 462, and a resistor 463. The high-speed data line interface 32A is made up of the LAN transmission signal transmission circuit 441, the terminal resistor 442, AC coupling resistors 443, 444, the LAN signal reception circuit 445, and the subtraction circuit 446.

A series circuit of the resistor 462 and the resistor 463 is connected between the power supply line (+5.0 V) and the ground line. A series circuit made up of the choke coil 461, the AC coupling resistor 444, the terminal resistor 442, the AC coupling resistor 443, and the pulldown resistor 451 is connected between the connection point of the resistor 462 and the resistor 463 and the ground line.

A connection point P3 shared by the coupling resistor 443 and the terminal resistor 442 is connected to the positive output side of the LAN signal transmission circuit 441 and to the positive input side of the LAN signal reception circuit 445. A connection point P4 shared by the AC coupling resistor 444 and the terminal resistor 442 is connected to the negative output side of the LAN signal transmission circuit 441 and to the negative input side of the LAN signal reception circuit 445. To the input side of the LAN signal transmission circuit 441, transmission signal (transmission data) SG417 is supplied.

To the positive terminal of the subtraction circuit 446 is supplied with output signal SG418 of the LAN signal reception circuit 445. To the negative terminal of the subtraction circuit 446 is transmission signal SG417 is supplied. The subtraction circuit 446 subtracts transmission signal SG417 from output signal SG418 of the LAN signal reception circuit 445 to provide reception signal (reception data) SG419.

Connection point Q3 shared by the pulldown resistor 451 and the AC coupling resistor 443 is connected to the ground line via a series circuit of the resistor 452 and the capacitor 453. An output signal of a lowpass filter obtained at the connection point between the resistor 452 and the capacitor 453 is connected to one input terminal of the comparator 454. The comparator 454 compares the output signal of the lowpass filter with reference voltage Vref3 (+1.25 V) to be supplied to the other input terminal. Output signal SG416 of this comparator 454 is supplied to the CPU 51.

A reserved line 501 and an HPD line 502 contained in the HDMI cable 1 form a differential twisted pair. A source-side terminal 511 of the reserved line 501 is connected to 14-pin of the HDMI terminal 11 and a sink-side terminal 521 of the reserved line 501 is connected to 14-pin of the HUMI terminal 31. A source-side terminal 512 of the HPD line 502 is connected to 19-pin of the HDMI terminal 11 and a sink-side terminal 522 of the HPD line 502 is connected to 19-pin of the HDMI terminal 31.

In the personal computer 10, the above-mentioned connection point Q1 between the pullup resistor 421 and the AC coupling capacitor 413 is connected to 14-pin of the HDMI terminal 11 and the above-mentioned connection point Q2 between the pulldown resistor 431 and the AC coupling capacitor 414 is connected to 19-pin of the HDMI terminal 11. On the other hand, in the television receiver 30, the above-mentioned connection point Q3 between the pulldown resistor 451 and the coupling resistor 443 is connected to 14-pin of the HDMI terminal 31 and the above-mentioned connection point Q4 between the choke coil 461 and the AC coupling resistor 444 is connected to 19-pin of the HDMI terminal 31.

The following describes an operation of LAN communication based on the high-speed data line interfaces 12A, 32A configured as described above.

In the personal computer 10, transmission signal (transmission data) SG411 is supplied to the input side of the LAN signal transmission circuit 411. From this LAN signal transmission circuit 411, differential signals (a positive output signal and a negative output signal) corresponding to transmission signal SG411 are outputted. The differential signals outputted from the LAN signal transmission circuit 411 are supplied to connection points P1 and P2 to be transmitted to the television receiver 30 via the pair of lines (the reserved line 501, the HPD line 502) of the HDMI cable 1.

In the television receiver 30, transmission signal (transmission data) SG417 is supplied to the input side of the LAN signal transmission circuit 441 and differential signals (a positive output signal and a negative output signal) corresponding to transmission signal SG417 is outputted from the LAN signal transmission circuit 441. The differential signals outputted from the LAN signal transmission circuit 441 are supplied to connection points P3 and P4 to be transmitted to the personal computer 10 via the pair of lines (the reserved line 501 and the HPD line 502) of the HDMI cable 1.

In the personal computer 10, the input side of the LAN signal reception circuit 415 is connected to the connection points P1 and P2, so that a signal obtained by adding a transmission signal corresponding to the differential signal (a current signal) outputted from the LAN signal transmission circuit 411 to a reception signal corresponding to the differential signal transmitted from the television receiver 30 as described above is obtained as output signal SG412 of the LAN signal reception circuit 415. The subtractor 416 subtracts transmission signal SG411 from output signal SG412 of the LAN signal reception circuit 415. Hence, output signal SG413 of the subtractor 416 corresponds to transmission signal (transmission data) SG417 of the television receiver 30.

In the television receiver 30, the input side of the LAN signal reception circuit 445 is connected to connection points P3 and P4, so that a signal obtained by adding a transmission signal corresponding to the differential signal (a current signal) outputted from the LAN signal transmission circuit 441 to a reception signal corresponding to the differential signal transmitted from the personal computer 10 as described above is obtained as output signal SG418 of the LAN signal reception circuit 445. The subtraction circuit 446 subtracts transmission signal SG417 from output signal SG418 of the LAN signal reception circuit 445. Hence, output signal SG419 of the subtraction circuit 446 corresponds to transmission signal (transmission data) SG411 of the personal computer 10.

Thus, between the high-speed data line interface 12A of the personal computer 10 and the high-speed data line interface 32A of the television receiver 30, bidirectional LAN communication can be executed.

According to the exemplary configuration shown in FIG. 8, with an interface in which one HDMI cable 1 carries out the transmission of video and audio data, the exchange and authentication of connected device information, the communication of device control data, and LAN communication, LAN communication is executed in a bidirectional communication manner via one pair of differential transmission paths and the connection status of the interface is notified by at least one of the DC bias potentials of the transmission paths, so that spatial separation can be made in which an SCL line and an SDA line are not physically used for LAN communication. As a result, this separation can form a circuit for LAN communication without regard to the electrical specifications defined for DDC, thereby realizing stable, certain, and low-cost LAN communication.

It should be noted that, in FIG. 8, the HPD line 502 notifies the personal computer 10 of the connection of the HDMI cable 1 with the television receiver 30 on a DC bias level, in addition to the above-mentioned LAN communication. Namely, when the HDMI cable 1 is connected to the television receiver 30, the resistors 462 and 463 and the choke coil 461 bias the HPD line 502 to approximately 4 V via 19-pin of the HDMI terminal 31. The personal computer 10 detects the DC bias of the HPD line 502 through a lowpass filter made up of the resistor 432 and the capacitor 433, which is compared with reference voltage Vref2 (1.4 V for example) through the comparator 434.

If the HDMI cable 1 is not connected to the television receiver 30, a voltage on 19-pin of the HDMI terminal 11 is lower than reference voltage Vref2 because of the existence of the pulldown resistor 431. Conversely, if the HDMI cable 1 is connected to the television receiver 30, the voltage is higher than reference voltage Vref2. Therefore, if the HDMI cable 1 is connected to the television receiver 30, output signal SG415 of the comparator 434 is at the high level; otherwise, output signal SG415 is at the low level. Consequently, the CPU 13 of the personal computer 10 can recognize whether the HDMI cable 1 is in connection with the television receiver 30 on the basis of output signal SG415 of the comparator 434.

Referring to FIG. 8, the present embodiment also has capabilities by which the devices connected on both ends of the HDMI cable 1 can mutually recognize whether each is LAN-communication enabled (hereafter referred to as "e-HDMI compliant device") or LAN-communication disabled (hereafter referred to as "e-HDMI noncompliant device"), at a DC bias potential of the reserved line 501.

As described above, the personal computer 10 pulls up (+5 V) the reserved line 501 and the television receiver 30 pulls down the reserved line 501 by the pulldown resistor 451. None of the pullup resistors 421, 451 is arranged in e-HDMI noncompliant devices.

As described above, the personal computer 10 causes the comparator 424 to compare the DC potential of the reserved line 501 that has passed the lowpass filter composed of the resistor 422 and the capacitor 423 with reference voltage Vref1. If the television receiver 30 is an e-HDMI compliant device and has the pulldown resistor 451, then the voltage of the reserved line 501 is 2.5 V. However, if the television receiver 30 is an e-HDMI non-compliant device and has not pulldown resistor 451, the voltage of the reserved line 501 is 5 V due to the presence of the pullup resistor 421.

Hence, if reference voltage Vref1 is 3.75 V for example, output signal SG414 of the comparator 424 goes low when the television receiver 30 is an e-HDMI compliant device; otherwise, output signal SG414 goes high. Consequently, the CPU 13 of the personal computer 10 can recognize, on the basis of output signal SG414 of the comparator 424, whether the television receiver 30 is an e-HDMI compliant device or not.

Likewise, as described above, the television receiver 30 causes the comparator 454 to compare the DC potential of the reserved line 501 that has passed the lowpass filter composed of the resistor 452 and the capacitor 453 with reference voltage Vref3. If the personal computer 10 is an e-HDMI compliant device and has the pullup resistor 421, then the voltage of the reserved line 501 is 2.5 V. However, if the personal computer 10 is an e-HDMI non-compliant device and has not pullup resistor 421, the voltage of the reserved line 501 is 0 V due to the presence of the pulldown resistor 451.

Hence, if reference voltage Vref3 is 1.25 V for example, output signal SG416 of the comparator 454 goes high when the personal computer 10 is an e-HDMI compliant device; otherwise, output signal SG416 goes low. Consequently, the CPU 51 of the television receiver 30 can recognize, on the basis of output signal SG416 of the comparator 454, whether personal computer 10 is an e-HDMI device or not.

The following describes an operation of the AV system 5 shown in FIG. 1.

In this AV system 5, if the user instructs recording by operating the remote control transmitter 57 while a predetermined program (channel) is being viewed on the television receiver 30, this predetermined program is recorded on the personal computer 10.

In this case, the television receiver 30 encrypts a partial TS (video data TS packet and audio data TS packet) obtained by the demultiplexer 39 through the DTCP circuit 47 and then supplies the encrypted partial TS to the high-speed data line interface 32A via the Ethernet interface 54. The high-speed data line interface 32A transmits the received partial TS to the HDMI cable 1 from the HDMI terminal 31, from which the partial TS is transmitted to the personal computer 10.

The high-speed data line interface 12A of the personal computer 10 receives the partial TS of the above-mentioned predetermined program transmitted from the television receiver 30 via the HDMI cable 1 and supplies the received partial TS to the CPU 13 via the Ethernet interface 22. Then, the CPU 13 decodes this partial TS and then stores the decoded partial TS to the storage section 20, a HDD for example. Consequently, in the personal computer 10, the predetermined program being viewed by the user is recorded.

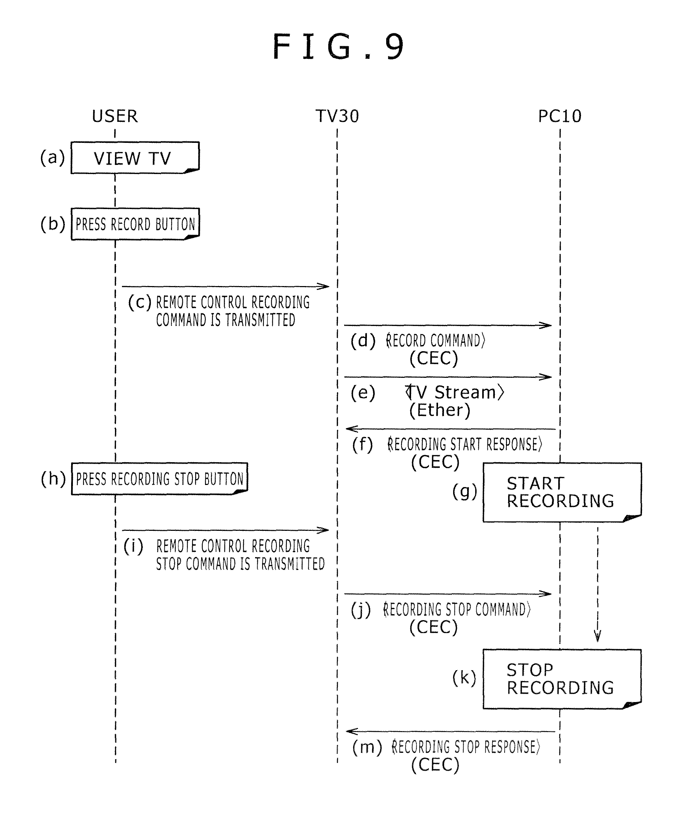

FIG. 9 shows an example of an operation sequence to be executed when the user instructs recording through the remote control transmitter 57 of the television receiver 30 as described above.

(a) With the user viewing a predetermined program (channel) on the television receiver 30, (b) if the user presses the record button of the remote control transmitter 57 to instruct recording, (c) a remote control command (remote control signal) of recording instruction is supplied from the remote control transmitter 57 to the television receiver 30.

(d) In response to the remote command of recording instruction, the television receiver 30 transmits a recording command to the personal computer 10 by use of the CEC line and (e), then, starts transmitting a partial TS of a predetermined program obtained in the demultiplexer 37 to the personal computer 10 by use of a high-speed data line (Ether). (f) In response, the personal computer 10 returns a recording start response meaning the start of recording to the television receiver 30 by use of the CEC line and (g), then, starts the recording of the decoded partial TS.

(h) Then, when the user presses the recording stop button of the remote control transmitter 57 to instruct the stop of recording, (i) a remote control command (remote control signal) for instructing the stop of recording is supplied from the remote control transmitter 57 to the television receiver 30.

(j) In response to the remote control command for instructing the stop of recording, the television receiver 30 stops the transmission of the partial TS to the personal computer 10 and, at the same time, transmits the recording stop command to the personal computer 10 by use of the CEC line. (k) In response, the personal computer 10 stops the recording on the storage section 20 and (m), then, returns a recording stop response meaning the stop of recording to the television receiver 30 by use the CEC line.

Also, in the AV system 5 shown in FIG. 1, if the user instructs the reproduction by operating the remote control transmitter 57 when the user is viewing a predetermined program (channel) on the television receiver 30, the partial TS of the predetermined program is reproduced from the storage section 20 of the personal computer 10 to be transmitted to the television receiver 30, thereby putting the television receiver 30 in a state of viewing this predetermined program.

In this case, the partial TS read from the storage section 20 of the personal computer 10 is encrypted by the CPU 13 to be supplied to the high-speed data line interface 12A via the Ethernet interface 22. The high-speed data line interface 12A transmits this partial TS from the HDMI terminal to the HDMI cable 1, thereby transmitting to the television receiver 30.

The high-speed data line interface 32A of the television receiver 30 receives the partial TS of the above-mentioned predetermined program that is transmitted from the personal computer 10 via the HDMI cable 1. This partial TS is decrypted by the DTCP circuit 47 via the Ethernet interface 54 and then supplied to the MPEG decoder 40. Consequently, on the television receiver 30, a reproduced image is displayed on the display panel 43 and a reproduced sound is outputted from the sneaker 46.

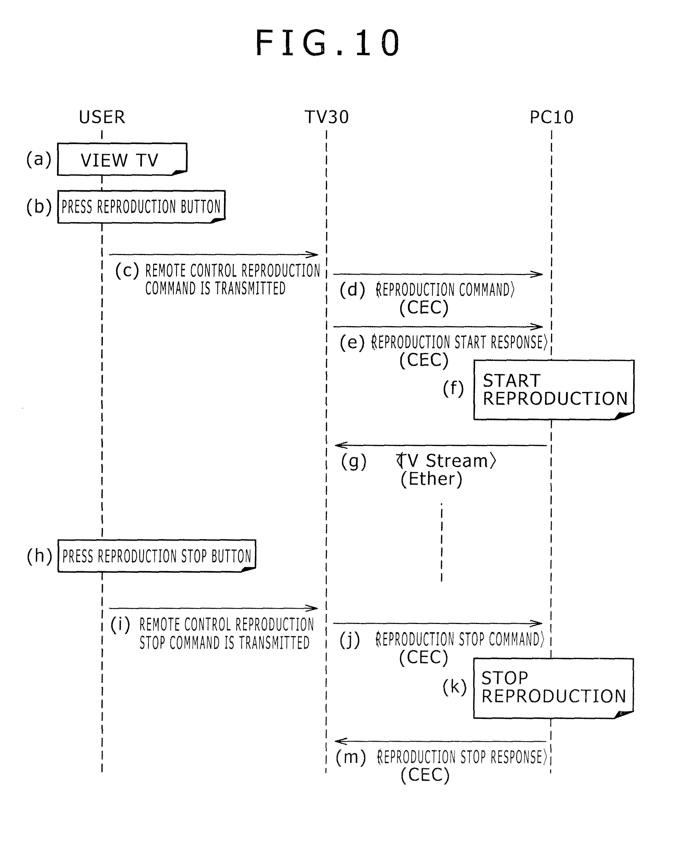

FIG. 10 shows one example of an operation sequence to be executed when the user instructs reproduction through the remote control transmitter 57 of the television receiver 30 as described above.

(a) With the user viewing a predetermined program (channel) on the television receiver 30, (b) if the user presses the reproduction button of the remote control transmitter 57 to instruct reproduction, (c) a remote control command (remote control signal) of reproducing instruction is supplied from the remote control transmitter 57 to the television receiver 30.

(d) In response to the remote command of reproduction instruction, the television receiver 30 transmits a reproduction command to the personal computer 10 by use of the CEC line. (e) In response, the personal computer 10 returns a reproduction start response meaning the start of reproduction to the television receiver 30 by use of the CEC line and (f), then, starts the reproduction of the decoded partial TS of a predetermined program from the storage section 20. (g) The reproduced partial TS is transmitted to the television receiver 30 by use of the high-speed data line (Ether). Consequently, the television receiver 30 is put in a state of viewing the reproduced program.

(h) Then, when the user presses the reproduction stop button of the remote control transmitter 57 to instruct the stop of reproduction, (i) a remote control command (remote control signal) of reproduction stop instruction is supplied from the remote control transmitter 57 to the television receiver 30.

(j) In response to the remote control command of reproduction stop instruction, the television receiver 30 transmits a reproduction stop command to the personal computer 10 by use of the CEC line. (k) In response, the personal computer 10 stop the reproduction from the storage section 20 and (m), then, returns a reproduction stop response meaning the stop of reproduction to the television receiver 30 by use of the CEC line.

Also, in the AV system 5 shown in FIG. 1, the personal computer 10 requests the television receiver 30 for the transmission of the partial TS of a predetermined program, thereby recording the predetermined program by this personal computer 10.

In this case, the personal computer 10 transmits a request signal for requesting the transmission of the partial TS (TS packets of video data, TS packets of audio data) of a predetermined program obtained by the demultiplexer 37 to the television receiver 30 by use of the CEC line. The personal computer 10 encrypts the partial TS of this predetermined program by the DTCP circuit and then supplies to the high-speed data line interface 32A via the Ethernet interface 54. The high-speed data line interface 32A transmits this partial TS from the HDMI terminal 31 to the HDMI cable 1, thereby transmitting to the personal computer 10.

The high-speed data line interface 12A of the personal computer 10 receives the partial TS of the above-mentioned predetermined program transmitted from the television receiver 30 via the HDMI cable 1 and supplies to the CPU 13 via the Ethernet interface 22. Then, the CPU 13 decrypts this partial TS and then records to the HDD, for example, in the storage section 20. Consequently, in the personal computer 10, a predetermined program requested by itself is recorded.

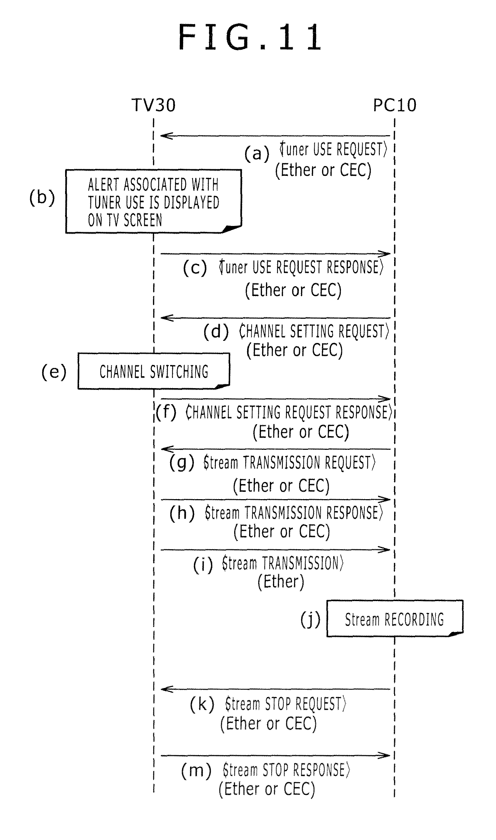

FIG. 11 shows one example of an operation sequence to be executed when the personal computer 10 requests the television receiver 30 for the transmission of a partial TS of a predetermined program to execute recording processing as described above.

(a) The personal computer 10 transmits a request signal <Tuner use request> for requesting the use of tuner (the broadcast reception section) to the television receiver 30 by use of the CEC line or the high-speed data line (Ether). Here, in the present embodiment, the broadcast reception section is configured by the digital tuner 38 and the demultiplexer 39 as described above.

(b) Having received the request signal <Tuner use request>, the television receiver 30 executes alert display associated with the use of tuner on the screen. This alert display is indicative that, when the user is viewing a television program, for example, a tuner use is requested and there is a possibility of channel change, thereby asking the user if the use is permitted or not. This alert display is executed by use of functions of generating and superimposing graphic data in the video/graphics processing circuit 41, for example.

(c) If the user permits the use by operating the remote control transmitter 57, for example, the television receiver 30 transmits a response of tuner use permission <Tuner use request response> to the personal computer 10 by use of the CEC line or the high-speed data line.

It should be noted that, if the user is not viewing a television program and therefore the broadcast reception section is not substantially in use, the television receiver 30 may immediately transmit a response <Tuner use request response> for permitting the use of tuner to the personal computer 10 without executing alert display.

Also, although not shown, if the television receiver 30 has two or more broadcast reception sections and if the permission of a tuner is given to the personal computer 10, the user's viewing of a television is not affected, then, likewise, a response <Tuner use request response> for permitting the use of tuner may be immediately transmitted to the personal computer 10 without executing alert display.

(d) Next, having receiving the permission of the use of tuner, the personal computer 10 transmits a request signal <channel setting request> for requesting channel setting to the television receiver 30 by use of the CEC line or the high-speed data line. (e) On the basis of this request signal, the television receiver 30 switches the receiving channel of the tuner (broadcast reception section) to a channel requested by the personal computer 10. (f) Then, the television receiver 30 returns a response <channel setting request response> indicative that the channel setting has been done to the personal computer 10 by use of the CEC line or the high-speed data line.

(g) Next, the personal computer 10 transmits a request signal <Stream transmission request> for requesting the transmission of a stream, namely, a partial TS outputted from the demultiplexer 37 to the television receiver 30 by use of the CEC line or the high-speed data line. (h) In response to this transmission request, the television receiver 30 returns a response <Stream transmission response> to the personal computer 10 by use of the CEC line or the high-speed data line.

(i) And the television receiver 30 starts the transmission of the stream data to the personal computer 10 by use of the high-speed data line (Ether). (j) The personal computer to which the stream data has been transmitted from the television receiver 30 starts recording this stream data.

(k) Then, when the recording of the necessary stream data has been completed, the personal computer 10 transmits a request signal <Stream stop request> for requesting the stop of transmitting stream data to the television receiver 30 by use of the CEC line or the high-speed data line. (m) On the basis of this request signal, the television receiver 30 stops transmitting the stream data and returns a response <Stream stop response> indicative that the transmission of the stream data has been stopped to the personal computer 10 by use of the CEC line or the high-speed data line.

Also, in the AV system 5 shown in FIG. 1, the personal computer 10 requests the television receiver 30 for the transmission of a partial TS of a predetermined program and this personal computer 10 executes processing of synthesizing with another video signal (image data), thereby transmitting a video signal obtained as a result of the synthesis to the television receiver 30.

In this case, the personal computer 10 transmits a request signal for requesting the transmission of a partial TS (TS packets of video data, TS packets of audio data) of a predetermined program obtained by the demultiplexer 37 to the television receiver 30 by use of the CEC line. The television receiver 30 encrypts the partial TS of this predetermined program through the DTCP circuit and supplies to the high-speed data line interface 32A via the Ethernet interface 54. The high-speed data line interface 32A transmits this part TS from the HDMI terminal 31 to HDMI cable 1, thereby transmitting to the personal computer 10.

The High-speed data line interface 12A of the personal computer 10 receives the partial TS of the above-mentioned predetermined program transmitted from the television receiver 30 via the HDMI cable 1 and supplies to the CPU 13 via the Ethernet interface 22. And the CPU 13 decrypts this part TS and then executes the processing of synthesizing with another video signal.

Here, another video signal denotes a video signal reproduced from the storage section 30 or by the drive 21, a video signal for displaying a Web page generated by a Web browser, a video signal for displaying a desktop screen of the personal computer 10, or the like.

The personal computer 10 transmits a video signal obtained by the synthesis processing from the HDMI storage section 12 to the television receiver 30 by use of the TDMS channel of the HDMI. Consequently, an image of television program are displayed on the television receiver 30 along with another image.

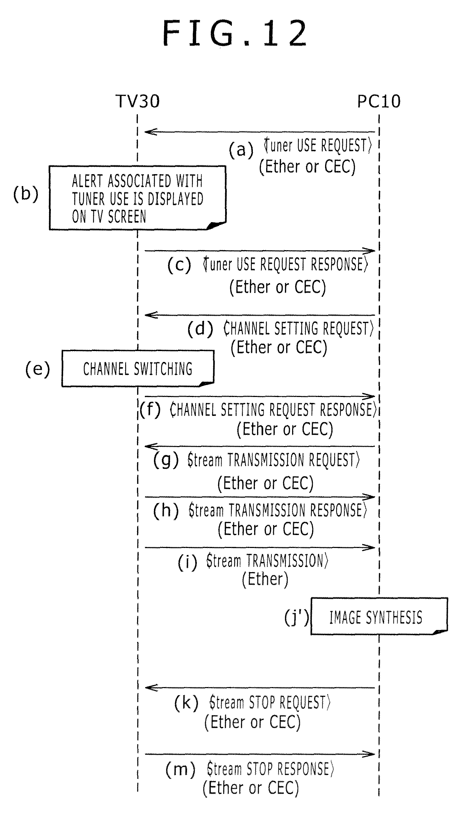

FIG. 12 shows one example of an operation sequence to be executed when the personal computer 10 requests the television receiver 30 for the transmission of a partial TS of a predetermined program to execute synthesis processing as described above.

This operation sequence, in the operation sequence shown in FIG. 11 described above, is obtained by replacing portion (j) for recording stream data transmitted from the television receiver 30 by portion (j') for image synthesis, among the processing operations to be executed by the personal computer 10. In executing this image synthesis, the personal computer 10 decodes the stream transmitted from the television receiver 30 into a baseband video signal (image data) and then executes synthesizing processing. And the personal computer 10 transmits the video signal after synthesis processing to the television receiver 30 over the TMDS channel of HDMI.

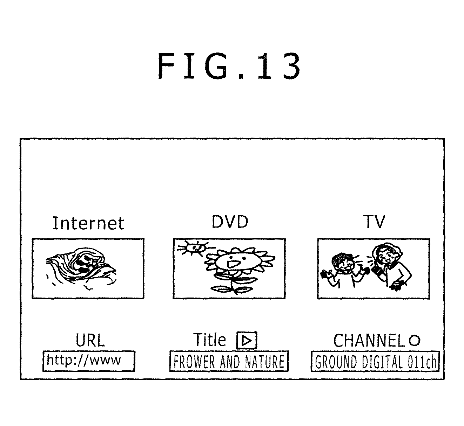

FIG. 13 shows an image display example based on the video signal after synthesis processing. In this image display example, an Internet web page, a DVD reproduced image, and a television image are inserted in a desktop screen. Such a synthesized image is displayed when the user selects any of a web page, a DVD reproduced image, and a television image, for example.

As described above, in the AV system 5 shown in FIG. 1, stream data (a partial TS obtained by the demultiplexer 39) obtained in the television receiver 30 is transmitted to the personal computer 10 by use of a high-speed data line for use in recording, image synthesis, and the like, thereby allowing the effective use of the tuner (broadcast reception section) of the television receiver 30.

It should be noted that, in the AV system 5 shown in FIG. 1, the communication section that executes bidirectional communication is configured by the reserved line (Ethernet - line) or the HPD line (Ethernet + line) of the HDMI cable 1 (see FIG. 8). However, the configuration of the communication section that executes bidirectional communication is not restricted to the above-mentioned configuration. The following describes other exemplary configurations. In each of the configurations shown below, it is assumed that the personal computer 10 be the source device and the television receiver 30 be the sink device.

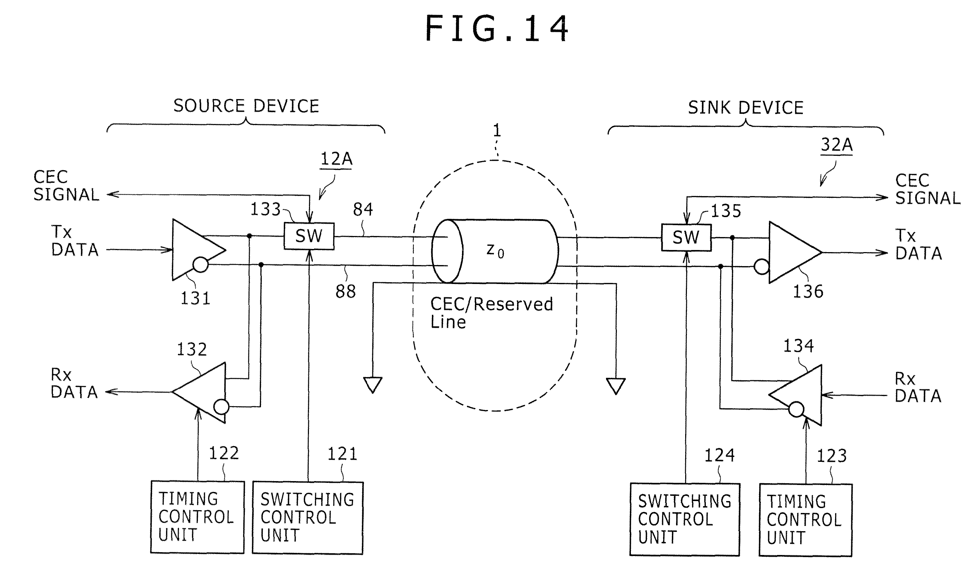

FIG. 14 shows an example in which IP communication is executed in a half-duplex communication manner by use of the CEC line 84 and the reserved line 88. With reference to FIG. 14, components similar to those previously described with FIG. 4 are denoted by the same reference numerals and the description thereof will be omitted as appropriate.

A high-speed data line interface 12A that is a source device has a conversion unit 131, a decoding unit 132, a switch 133, a switching control unit 121, and a timing control unit 122. The conversion unit 131 is supplied with Tx data that is data transmitted from the source device to the sink device by bidirectional IP communication between the source device and the sink device.

The conversion unit 131, made up of a differential amplifier for example, converts the supplied Tx data into a differential signal composed of two part signals. Also, the conversion unit 131 transmits a differential signal obtained by the conversion to the sink device via a CEC line 84 and a reserved line 88. Namely, the conversion unit 131 supplies one of the part signals making up the differential signal obtained by the conversion to the switch 133 via the CEC line 84, to be more specific, a signal line arranged on the source device and connected to the CEC line 84 of a HDMI cable 1, and the other part signal to the sink device via the reserved line 88, to be more specific, a signal line arranged on the source device and connected to the reserved line 88 of the HDMI cable 1.

The decoding unit 132, made up of a differential amplifier for example, is connected at an input terminal thereof to the CEC line 84 and the reserved line 88. Under the control of the timing control unit 122, the decoding unit 132 receives a differential signal transmitted from the sink device via the CEC line 84 and the reserved line 88, namely, a differential signal made up of a part signal on the CEC line 84 and a part signal on the reserved line 88, decodes the received differential signal into Rx data that is the original data, and outputs the decoded signal. The Rx data denotes data that is transmitted from the sink device to the source device by the bidirectional IP communication therebetween.

At the time of data transmission, the switch 133 is supplied with a CEC signal from a control section (CPU) of the source device or a part signal making up a differential signal corresponding to Tx data transmitted from the conversion unit 131; at the time of data reception, the switch 133 is supplied with a CEC signal from the sink device or a part signal making up a differential signal corresponding to Rx data from the sink device. Under the control of the switching control unit 121, the switch 133 selects a CEC signal from the control section (CPU), a CEC signal from the sink device, a part signal making up a differential signal corresponding to Tx data, or a part signal making up a differential signal corresponding to Rx data and outputs the selected signal.

Namely, when the source device transmits data to the sink device, the switch 133 selects a CEC signal transmitted from the control section (CPU) or one of the part signals supplied from the conversion unit 131 and transmits the selected CEC signal or part signal to the sink device via the CEC line 84.

Also, when the source device receives data from the sink device, the switch 133 receives a CEC signal transmitted from the sink device via the CEC line 84 or a part signal of a differential signal corresponding to Rx data and supplies the received CEC signal or part signal to the control section (CPU) or the decoding unit 132.

The switching control unit 121 controls the switch 133 to select one of signals that are supplied to the switch 133. The timing control unit 122 controls the timing of receiving a differential signal by the decoding unit 132.

The high-speed data line interface 32A has a conversion unit 134, a decoding unit 136, a switch 135, a switching control unit 124, and a timing control unit 123. The conversion unit 134, made up of a differential amplifier for example, is supplied with Rx data. The conversion unit 134 converts the supplied Rx data into a differential signal made up of two part signals and transmits the differential signal obtained by the conversion to the source device via the CEC line 84 and the reserved line 88.

Namely, the conversion unit 134 supplies one of the part signals making up a differential signal obtained by the conversion to the switch 135 via the CEC line 84, to be more specific, a signal line arranged on the sink device and connected to the CEC line 84 of the HDMI cable 1 and the other part signal making up the differential signal to the source device via the reserved line 88, to be more specific a signal line arranged on the sink device and connected to the reserved line 88 of the HDMI cable 1 and the reserved line 88.

When data is received, the switch 135 is supplied with a CEC signal from the source device or a part signal making up a differential signal corresponding to Tx data from the source device; when data is transmitted, the switch 135 is supplied with a part signal making up a differential signal corresponding to Rx data from the conversion unit 134 or a CEC signal from the control section (CPU) of the sink device. Under the control of the switching control unit 124, the switch 135 selects a CEC signal from the source device, a CEC signal from the control section (CPU), a part signal making up a differential signal corresponding to Tx data, or a part signal making up a differential signal corresponding to Rx data and outputs the selected signal.

Namely, when the sink device transmits data to the source device, the switch 135 selects a CEC signal transmitted from the control section (CPU) of the sink device or one of the part signals supplied from the conversion unit 134 and transmits the selected CEC signal or part signal to the source device via the CEC line 84.

Also, when the sink device receives data from the source device, the switch 135 receives a CEC signal transmitted from the source device via the CEC line 84 or a part signal of a differential signal corresponding to Tx data and supplies the received CEC signal or part signal to the control section (CPU) or the decoding unit 136.

The decoding unit 136, made up of a differential amplifier for example, is connected at an input terminal thereof to the CEC line 84 and the reserved line 88. The decoding unit 136 receives a differential signal transmitted from the source device via the CEC line 84 and the reserved line 88, namely, a differential signal made up of a part signal on the CEC line 84 and a part signal on the reserved line 88, decodes the received differential signal into Tx data that is the original data, and outputs the decoded signal.

The switching control unit 124 controls the switch 135 to select one of signals that are supplied to the switch 135. The timing control unit 123 controls the timing of transmitting a differential signal by the conversion unit 134.

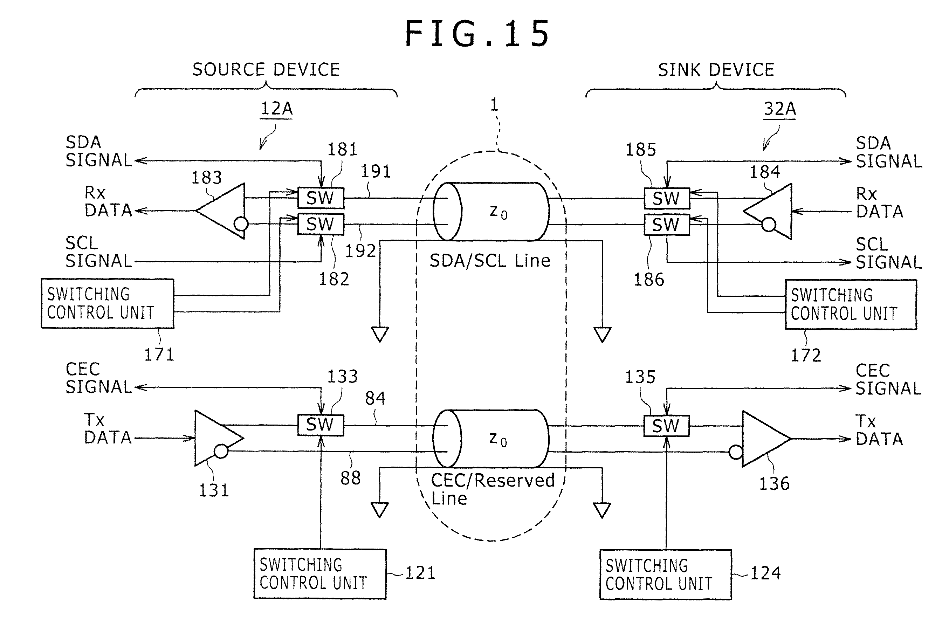

FIG. 15 shows an example in which IP communication based on full-duplex communication is executed by use of a signal line (an SDA line) along which an SDA signal is transmitted and a signal line (an SCL line) along which an SCL signal is transmitted. It should be noted that, with reference to FIG. 15, components similar to those previously described with reference to FIG. 14 are denoted by the same reference numerals and the description thereof will be omitted appropriately.

A high-speed data line interface 12A of a source device has a conversion unit 131, a switch 133, a switch 181, a switch 182, a decoding unit 183, a switching control unit 121, and a switching control unit 171.

When data is transmitted, the switch 181 is supplied with an SDA signal from a control section (CPU) of a source device; when data is received, the switch 181 is supplied with an SDA signal from a sink device or a part signal making up a differential signal corresponding to Rx data from the sink device. Under the control of the switching control unit 171, the switch 181 selects an SDA signal from the control section (CPU), an SDA signal from the sink device, or a part signal making up a differential signal corresponding to Rx data and outputs the selected signal.

Namely, when the source device receives data from the sink device, the switch 181 receives an SDA signal transmitted from the sink device via an SDA line 191 that is a signal line along which an SDA signal is transmitted or a part signal of a differential signal corresponding to Rx data and supplies the received SDA signal or part signal to the control section (CPU) or the decoding unit 183.

When the source device transmits data to the sink device, the switch 181 transmits an SDA signal supplied from the control section (CPU) to the sink device via the SDA line 191 or nothing to the sink device.

When data is transmitted, the switch 182 is supplied with an SCL signal from the control section (CPU) of the source device; when data is received, the switch 181 is supplied with a part signal making up a differential signal corresponding to Rx data from the sink device. Under the control of the switching control unit 171, the switch 182 selects the SCL signal or the part signal making up the differential signal corresponding to Rx data and outputs the selected signal.

Namely, when the source device receives data from the sink device, the switch 182 receives the part signal of the differential signal corresponding to Rx data transmitted from the sink device via an SCL line 192 that is the signal line along which an SCL signal is transmitted and supplies the received part signal or nothing to the decoding unit 183.

When the source device transmits data to sink device, the switch 182 transmits an SCL signal supplied from the control section (CPU) of the source device to the sink device via the SCL line 192 or nothing to the sink device.

The decoding unit 183, made up of a differential amplifier for example, is connected at an input terminal thereof to the SDA line 191 and the SCL line 192. The decoding unit 183 receives a differential signal transmitted from the sink device via the SDA line 191 and the SCL line 192, namely, a differential signal made up of a part signal on the SDA line 191 and a part signal on the SCL line 192, decodes the received differential signal into Rx data that is the original data, and outputs the decoded signal.

The switching control unit 171 controls the switch 181 and the switch 182 such that one of the signals to be supplied is selected for each switch.

The high-speed data line interface 32A making up the sink device has a conversion unit 184, a switch 135, a switch 185, a switch 186, a decoding unit 136, a switching control unit 172, and a switching control unit 124.

The conversion unit 184, made up of a differential amplifier for example, is supplied with Rx data. The conversion unit 184 converts the supplied Rx data into a differential signal made up of two part signals and transmits the differential signal obtained by the conversion to the source device via the SDA line 191 and the SCL line 192. Namely, the conversion unit 184 transmits one part signal making up the differential signal obtained by the conversion to the source device via the switch 185 and the other part signal making up the differential signal to the source device via the switch 186.

When data is transmitted, the switch 185 is supplied with a part signal making up a differential signal corresponding to Rx data from the conversion unit 184 or an SDA signal from the control section (CPU) of the sink device; when data is received, the switch 185 is supplied with an SDA signal from the source device. Under the control of the switching control unit 172, the switch 185 selects an SDA signal from the control section (CPU), an SDA signal from the source device, or a part signal making up a differential signal corresponding to Rx data and outputs the selected signal.

Namely, when the data is received by the sink device from the source device, the switch 185 receives the SDA signal transmitted from the source device via the SDA line 191 and supplies the received SDA signal to the control section (CPU) or receives nothing.

Also, when the sink device transmits data to the source device, the switch 185 transmits an SDA signal supplied from the control section (CPU) or a part signal supplied from the conversion unit 184 to the source device via the SDA line 191.

When data is transmitted, the switch 186 is supplied with a part signal making up a differential signal corresponding to Rx data from the conversion unit 184; when data is received, the switch 186 is supplied with an SCL signal from the source device. Under the control of the switching control unit 172, the switch 186 selects the part signal making up the differential signal corresponding to Rx data or the SCL signal and outputs the selected signal.

Namely, when data is received by the sink device from the source device, the switch 186 receives an SCL signal transmitted from the source device via the SCL line 192 and supplies the received SCL signal to the control section (CPU) or receives nothing.

Also, when data is received by the source device from the sink device, the switch 186 transmits a part signal supplied from the conversion unit 184 to the source device via the SCL line 192 or transmits nothing.

The switching control unit 172 controls switching the switch 185 and the switch 186 such that one of the supplied signals is selected for each switch.

It should be noted that, when IP communication is executed between the source device and the sink device, the availability of half-duplex communication or full-duplex communication is determined by the configurations of the source device and the sink device. Therefore, the source device references E-EDID received from the sink device to determine whether to execute half-duplex communication, full-duplex communication, or bidirectional communication based on CEC signal transfer.

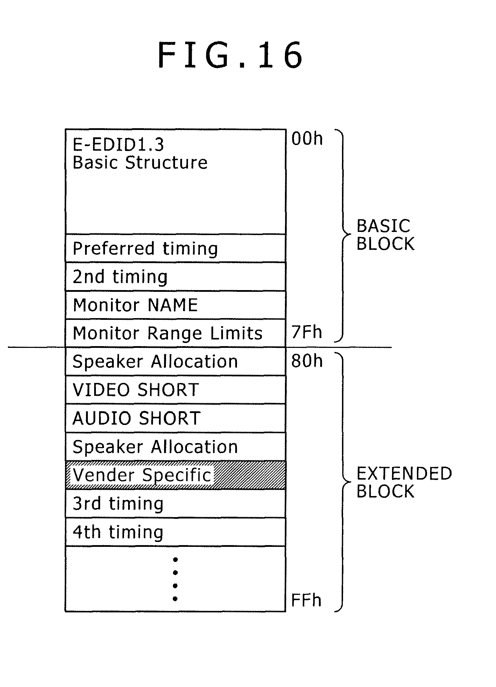

The E-EDID that is received by the source device is made up of a basic block and an extended block as shown in FIG. 16, for example.

The basic block of E-EDID starts with data defined by the E-EDID 1.3 standard represented by "E-EDID 1.3 Basic Structure" followed by timing information for maintaining compatibility with the EDID of the past represented by "Preferred timing" and timing information, different from "Preferred timing," for maintaining the EDID of the past represented by "2nd timing."

In the basic block, "2nd timing" is followed by information indicative of the name of a display apparatus represented by "Monitor NAME" and information indicative of the number of displayable pixels represented by "Monitor Range Limits" when aspect ratios are 4:3 and 16:9, in this order.

The extended block starts with information associated with right and left loudspeakers represented by "Speaker Allocation," information indicative of displayable image size, frame rate, and interlaced/progressive, represented by "VIDEO SHORT," data written with information such as aspect ratio, data written with information such as reproducible audio codec, sampling frequency, cutoff frequency, and codec bit count, represented by "AUDIO SHORT," and information associated with right and left loudspeakers represented by "Speaker Allocation," in this order.

Also, in the extended block, "Speaker Allocation" is followed by data uniquely defined for each maker represented by "Vender Specific," timing information for maintaining compatibility with the EDID of the past represented by "3rd timing," and timing information for maintaining compatibility with the EDID of the past represented by "4th timing."

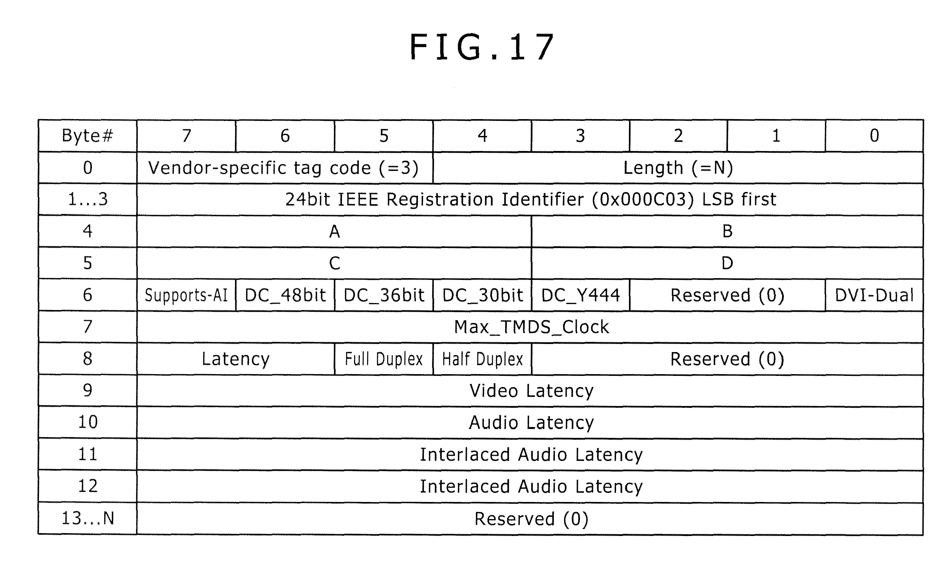

Further, data represented by "Vender Specific" has a data structure shown in FIG. 17. Namely, the data represented by "Vender Specific" has block 0 through block N, each being one byte long.

Block 0 arranged at the beginning of data represented by "Vender Specific" includes a header indicative of a data area of data "Vender Specific" represented by "Vender-Specific tag code (=3)" and information indicative of a length of data "Vender Specific" represented by "Length (=N)."

Also, block 1 through block 3 have information indicative of number "0x000C03" registered for HDMI(R) represented by "24bit IEEE Registration Identifier (0x000C03) LSB first." In addition, block 4 and block 5 have information indicative of the physical address of the sink device of 24 bits represented by "A," "B," "C," and "D," respectively.

Block 6 has a flag indicative of a function corresponding to the sink device represented by "Supports-AI," information for specifying the number of bits per pixel represented by "DC-48bit," "DC-36bit," and "DC-30bit," a flag indicative of the compatibility of the sink device with the transmission of an image of YCbCr4:4:4 represented by "DC-Y444," and a flag indicative of the compatibility of the sink device with dual DVI (Digital Visual Interface) represented by "DVI-Dual."

Block 7 has information indicative of a maximum frequency of TMDS pixel clock represented by "Max-TMDS-Clock." Block 8 has a flag indicative of presence or absence of video and audio latency information represented by "Latency," a full-duplex flag indicative of the availability of full-duplex communication represented by "Full Duplex," and a half-duplex flag indicative of the availability of half-duplex communication represented by "Half Duplex."

For example, if the full-duplex flag is set (set to "1" for example), it is indicative that the sink device has a function of executing full-duplex communication, namely, the sink device has the configuration shown in FIG. 15; if the full-duplex flag is reset (set to "0" for example), it indicates that the sink device has no function of executing full-duplex communication.

Likewise, if the half-duplex flag is set (set to "1" for example), it is indicative that the sink device has a function of executing half-duplex communication, namely, the sink device has the configuration shown in FIG. 14; if the half-duplex flag is reset (set to "0" for example), it indicates that the sink device has no function of executing half-duplex communication.

Block 9 of the data represented by "Vender Specific" has progressive video latency time data represented by "Video Latency." Block 10 has audio latency time data accompanying progressive video represented by "Audio Latency." Block 11 has interlaced video latency time data represented by "Interlaced Video Latency." Block 12 has audio latency time data accompanying interlaced video represented by "Interlaced Audio Latency."

On the basis of the full-duplex flag and the half-duplex flag included in the E-EDID received from the sink device, the source device determines whether to execute half-duplex communication or full-duplex communication or bidirectional communication based on CEC signal transfer. According to a result of this decision, the source device carries out bidirectional communication with the sink device.

For example, if the source device has the configuration shown in FIG. 14, the source device can execute half-duplex communication with the sink device shown in FIG. 14 but not with the sink device shown in FIG. 15. Therefore, the source device starts communication processing when the power to the source device is turned on, hereby carrying out bidirectional communication according to the capabilities of the sink device connected to the source device.

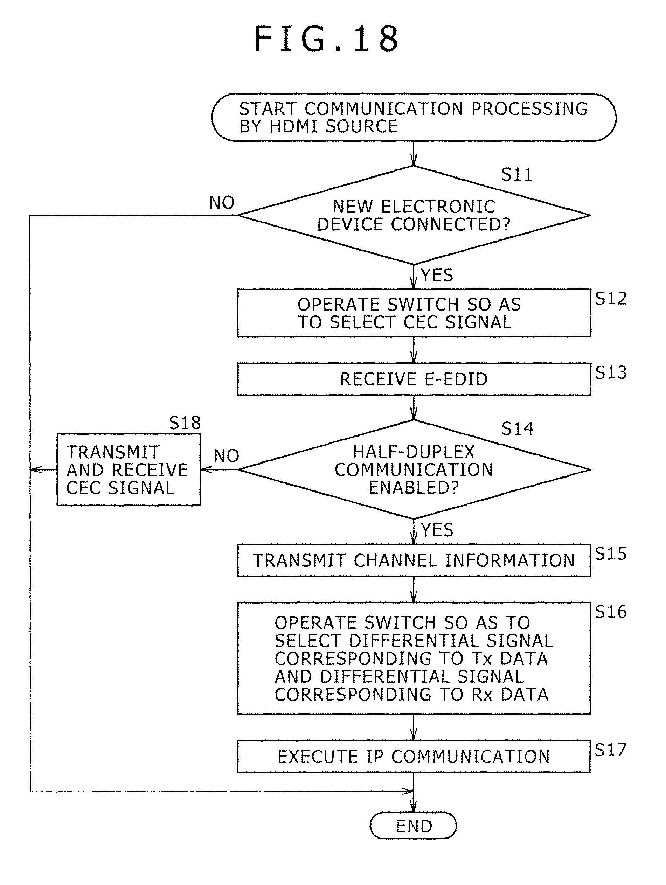

The following describes communication processing to be executed by the source device shown in FIG. 14 with reference to the flowchart shown in FIG. 18.

In step S11, the source device determines whether a new electronic device has been connected to the source device. For example, on the basis of the magnitude of a voltage applied to a pin called Hot Plug Detect to which the line 86 is connected, the source device determines whether a new electronic device (or a sink device) has been connected or not.

If no new electronic device is found connected in step S11, then no communication is carried out, so that the communication processing comes to an end. If a new electronic device is found connected in step S11 then the switching control unit 121 controls the switch 133 in step S12 so as to set the switch 133 to select a CEC signal from the control section (CPU) of the source device at the time of data transmission and select a CEC signal from the sink device at the time of data reception.

In step S13, the source device receives the E-EDID transmitted from the sink device via the DDC 83. Namely, upon detection of the connection with the source device, the sink device reads E-EDID from the EDID ROM 85 and transmits the read E-EDID to the source device via the DDC 83, so that the source device receives the E-EDID transmitted from the sink device.

In step S14, the source device determines whether half-duplex communication with the sink device can be carried out or not. Namely, referencing the E-EDID received from the sink device, the source device determines whether half-duplex flag "Half Duplex" shown in FIG. 17 is set or not. If the half-duplex flag is found set, for example, the source device determines that the bidirectional IP communication based on half-duplex communication is enabled, namely, half-duplex communication enabled.

If half-duplex communication is found enabled in step S14, then, the source device transmits, in step S15, a signal telling that IP communication based on half-duplex communication using the CEC line 84 and the reserved line 88 is carried out to the sink device via the switch 133 and the CEC line 84 as channel information indicative of a channel for use in bidirectional communication.

Namely, if the half-duplex flag is set, the source device knows that the sink device has the configuration shown in FIG. 14 and the half-duplex communication using the CEC line 84 and the reserved line 88 is enabled, so that the source device transmits the channel information to the sink device to notify the sink device of the execution of half-duplex communication.

In step S16, the switching control unit 121 controls the switch 133 to select a differential signal corresponding to Tx data from the conversion unit 131 at the time of data transmission and select a differential signal corresponding to Rx data from the sink device at the time of data reception.

In step S17, each section of the source device executes bidirectional IP communication with the sink device by half-duplex communication, upon which the communication processing comes to an end. To be more specific, at the time of data transmission, the conversion unit 131 converts the Tx data supplied from the control section (CPU) into a differential signal, transmits one of the part signals making up the differential signal obtained by the conversion to the switch 133, and transmits the other part signal to the sink device via the reserved line 88. The switch 133 transmits the part signal supplied from the conversion unit 131 to the sink device via the CEC line 84. Consequently, the differential signal corresponding to Tx data is transmitted from the source device to the sink device.

At the time of data reception, the decoding unit 132 receives a differential signal corresponding to Rx data transmitted from the sink device. To be more specific, the switch 133 receives a part signal of a differential signal corresponding to Rx data transmitted from the sink device via the CEC line 84 and supplies the received part signal to the decoding unit 132. Under the control of the timing control unit 122, the decoding unit 132 decodes differential signal made up of the part signal supplied from the switch 133 and the part signal supplied from the sink device via the reserved line 88 into the Rx data that is the original data and outputs the Rx data to the control section (CPU).

Consequently, the source device transmits and receives various data, such as control data, pixel data, and audio data, with the sink device.

If half-duplex communication is found not enabled in step S14, then the source device transmits and receives CEC signals in step S18 to carry out bidirectional communication with the sink device, upon which the communication processing comes to an end.

Namely, at the time of data transmission, the source device transmits a CEC signal to the sink device via the switch 133 and the CEC line 84 and, at the time of data reception, receives a CEC signal transmitted from the sink device via the switch 133 and the CEC line 84, thereby transmitting and receiving control data with the sink device.

Thus, the source device refers to the half-duplex flag to carry out half-duplex communication with the sink device enabled for half-duplex communication, by use of the CEC line 84 and the reserved line 88.

As described above, carrying out the half-duplex communication based on the CEC line 84 and the reserved line 88, namely, the IP communication based on half-duplex communication with the sink device by selecting the data to be transmitted and received by setting the switch 133 allows high-speed bidirectional communication while maintaining the compatibility with the HDMI of the past.

Further, as with the source device, the sink device also starts communication processing when the power to the sink device is turned on, thereby carrying out bidirectional communication with the source device.

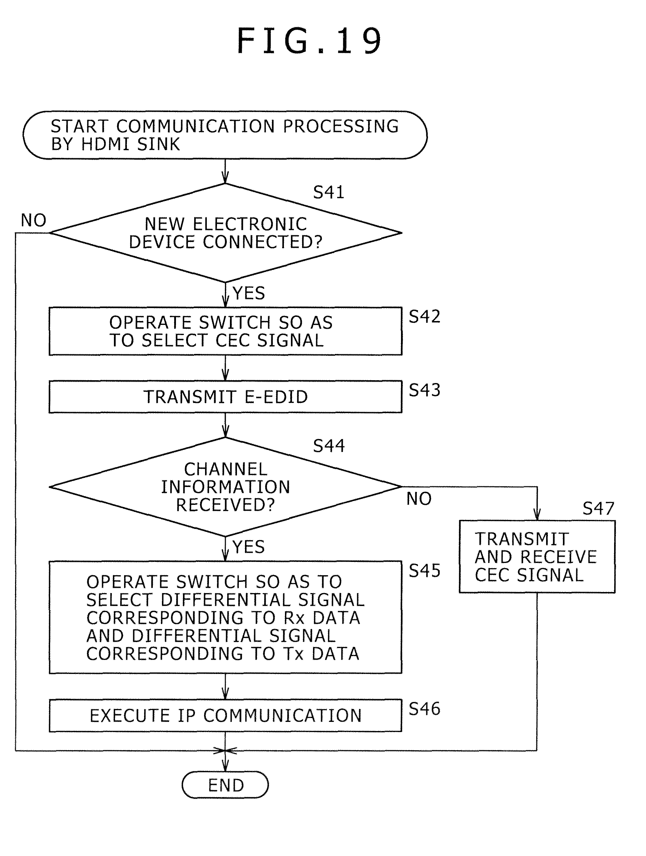

The following describes communication processing to be executed by the sink device shown in FIG. 14 with reference to the flowchart shown in FIG. 19.

In step S41, a sink device determines whether a new electronic device (or a source device) has been connected to the sink device. For example, on the basis of the magnitude of a voltage applied to a pin called Hot Plug Detect to which the line 86 is connected, the sink device determines whether a new electronic device has been connected or not.

If no new electronic device is found connected in step S41, then no communication is carried out, so that the communication processing comes to an end. If a new electronic device is found connected in step S41, then the switching control unit 124 controls the switch 135 in step S42 so as to set the switch 135 to select a CEC signal from the control section (CPU) of the sink device at the time of data transmission and select a CEC signal from the source device at the time of data reception,

In step S43, the sink device reads E-EDID from the REDID ROM 85 and transmits the read E-EDID to the source device via the DDC 83.

In step S44, the sink device determines whether channel information has been received from the source device.

To be more specific, channel information indicative of a bidirectional communication channel is transmitted from the source device depending on the functions of the source device and the sink device. For example, if the source device has the configuration shown in FIG. 14, the source device and the sink device are enabled for the half-duplex communication based on the CEC line 84 and the reserved line 88. Hence, from the source device to the sink device, channel information is transmitted telling that the IP communication based on the CEC line 84 and the reserved line 88 is carried out. The sink device receives the channel information transmitted from the source device via the switch 135 and the reserved line 88, thereby determining that the channel information has been received.

In contrast, if the source device has no function of executing half-duplex communication, no channel information is transmitted from the source device to the sink device, so that the sink device determines that no channel information has been received.

If the channel information is found received in step S44, then the procedure goes to step S45, in which the switching control unit 124 controls the switch 135 to select a differential signal corresponding to Rx data from the conversion unit 134 at the time of data transmission and select a differential signal corresponding to Tx data from the source device at the time of data reception.

In step S46, the sink device carries out bidirectional IP communication with the source device by half-duplex communication, upon which the communication processing comes to an end. To be more specific, at the time of data transmission, under the control of the timing control unit 123, the conversion unit 134 converts the Rx data supplied from the control section (CPU) of the sink device into a differential signal, supplies one of the part signals making up the differential signal obtained by this conversion to the switch 135, and supplies the other part signal to the source device via the reserved line 88. The switch 135 transmits the part signal supplied from the conversion unit 134 to the source device via the CEC line 84. Consequently, the differential signal corresponding to Rx data is transmitted from the sink device to the source device.

At the time of data reception, the decoding unit 136 receives the differential signal corresponding to Tx data transmitted from the source device. To be more specific, the switch 135 receives the part signal of the differential signal corresponding to Tx data transmitted from the source device via the CEC line 84 and supplies the received part signal to the decoding unit 136. The decoding unit 136 decodes the differential signal made up of the part signal supplied from the switch 135 and the part signal supplied from the source device via the reserved line 88 into the Tx data that is the original data and outputs the Tx data to the control section (CPU).

Consequently, the sink device transmits and receives various data, such as control data, pixel data, and audio data, with the source device.

If no channel information is found received in step S44, then the sink device transmits and receives CEC signals in step S47 to carry out bidirectional communication with the source device, upon which the communication processing comes to an end.

Namely, at the time of data transmission, the sink device transmits a CEC signal to the sink device via the switch 135 and the CEC line 84 and, at the time of data reception, receives a CEC signal transmitted from the source device via the switch 135 and the CEC line 84, thereby transmitting and receiving control data with the source device.

Thus, upon reception of the channel information, the sink device carries out half duplex communication with the source device by use of the CEC line 84 and the reserved line 88.

As described above, carrying out the half-duplex communication based on the CEC line 84 and the reserved line 88 with the source device by selecting the data to be transmitted and received by setting the switch 135 allows high-speed bidirectional communication while maintaining the compatibility with the HDMI of the past.

If the source device has the configuration shown in FIG. 15, the source device determines, in the communication processing, on the basis of the full-duplex flag contained in the E-EDID whether the sink device has a function of executing full-duplex communication, thereby carrying out bidirectional communication according to a result of this determination.

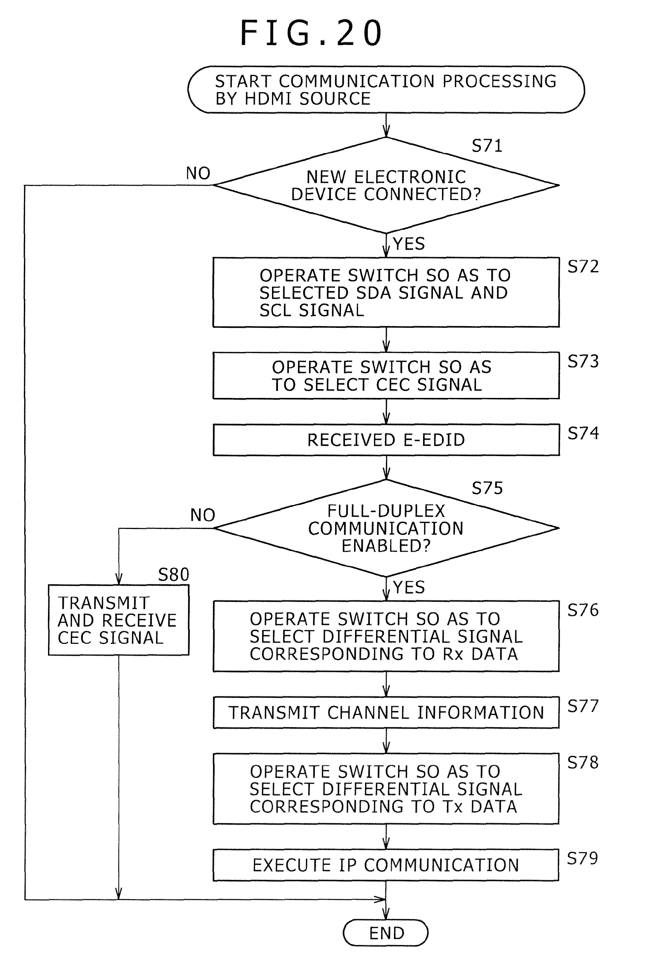

The following describes communication processing to be carried out by the source device shown in FIG. 15 with reference to the flowchart shown in FIG. 20.

In step S71, the source device determines whether a new electronic device has been connected to the source device. If no new electronic device is found connected in step S71, then no communication is carried out, upon which the communication processing comes to an end.

If a new electronic device is found connected in step S71, then, the switching control unit 171 controls the switch 181 and the switch 182 in step S72 to select an SDA signal from the control section (CPU) of the source device through the switch 181 at the time of data transmission, select an SCL signal from the control section (CPU) of the source device through the switch 182, and select, at the time of data reception, an SDA signal from the sink device through the switch 181.

In step S73, the switching control unit 121 controls the switch 133 to select a CEC signal from the control section (CPU) of the source device at the time of data transmission and a CEC signal from the sink device at the time of data reception.

In step S74, the source device receives E-EDID transmitted from the sink device via the SDA line 191 of the DDC 83. Namely, upon detection of the connection with the source device, the sink device reads E-EDID from the EDID ROM 85 and transmits the read E-EDID to the source device via the SDA line 191 of the DDC 83, so that the source device receives the E-EDID transmitted from the sink device.

In step S75, the source device determines whether full-duplex communication with the sink device is enabled or not. To be more specific, the sink device references the E-EDID received from the sink device to determine whether the full-duplex flag "Full Duplex" shown in FIG. 17 is set or not. For example, if the full-duplex flag is found set, the source device determines the bidirectional IP communication based on full-duplex communication, namely, the full-duplex communication is enabled or not.

If the full-duplex communication is found enabled in step S75, then the switching control unit 171 controls the switch 181 and the switch 182 in step S76 to select a differential signal corresponding to Rx data from the sink device at the time of data reception.

Namely, the at the time if data reception, the switching control unit 171 controls the switch 181 and the switch 182 such that, of the part signals making up a differential signal corresponding to Rx data transmitted from the sink device, one part signal transmitted via the SDA line 191 is selected through the switch 181 and the other part signal transmitted via the SCL line 192 is selected through the switch 182.

The SDA line 191 and the SCL line 192 making up the DDC 83 are used no more after E-EDID has been transmitted from the sink device to the source device, namely, the transmission and reception of an SDA signal and an SCL signal via the SDA line 191 and the SCL line 192 are not carried out after the transmission of E-EDID, so that the SDA line 191 and the SCL line 192 can be used as Rx data transmission paths based on full-duplex communication by switching the switch 181 and the switch 182.

In step S77, the source device transmits a signal telling that the IP communication based on full-duplex communication using the CEC line 84 and the reserved line 88 and the SDA line 191 and the SCL line 192 is carried out to the sink device via the switch 133 and the CEC line 84 as channel information indicative of a bidirectional communication channel.

To be more specific, if the full-duplex flag is not set, the source device knows that the sink device has the configuration shown in FIG. 15 and the full-duplex communication using the CEC line 84 and the reserved line 88 and the SDA line 191 and the SCL line 192 is enabled, so that the source device transmits the channel information to the sink device telling that the full-duplex communication is carried out.

In step S78, the switching control unit 121 controls the switch 133 to select a differential signal corresponding to Tx data from the conversion unit 131 at the time if data transmission. Namely, the switching control unit 121 controls the switch 133 such that a part signal of the differential signal corresponding to Tx data supplied from the conversion unit 131 to the switch 133 is selected.

In step S79, the source device, carries out bidirectional IP communication with the sink device, upon which the communication processing comes to an end. To be more specific, at the time of data transmission, the conversion unit 131 converts Tx data supplied from the control section (CPU) of the source device into a differential signal, supplies of the part signals making up this differential signal to the switch 133, and transmits the other part signal to the sink device via the reserved line 88. The switch 133 transmits the part signal supplied from the conversion unit 131 to the sink device via the CEC line 84. Consequently, the differential signal corresponding to Tx data is transmitted from the source device to the sink device.

At the time of data reception, the decoding unit 183 receives a differential signal corresponding to Rx signal transmitted from the sink device. To be more specific, the switch 181 receives one of the part signals of a differential signal corresponding to Rx data from the sink signal via the SDA line 191 and supplies the received part signal to the decoding unit 183. The switch 182 receives the other part signal of the differential signal corresponding to Rx data from the sink signal via the SCL line 192 and supplies the received part signal to the decoding unit 183. The decoding unit 183 decodes the differential signal made up of the part signal supplied from the switch 181 and the switch 182 into the Rx data that is the original data and outputs the Rx data to the control section (CPU).

Consequently, the source device transmits and receives various data, such as control data, pixel data, and audio data, with the sink device.

If the full-duplex communication is found not enabled in step S75, then the source device carries out bidirectional communication with the sink device by transmitting and receiving CEC signals in step S80, upon which the communication processing ends.

Namely, at the time of data transmission, the source device transmits a CEC signal to the sink device via the switch 133 and the CEC line 84 and, at the time of data reception, receives a CEC signal transmitted from the sink device via the switch 133 and the CEC line 84, thereby transmitting and receiving control data with the sink device.

Thus, the source device refers to the full-duplex flag to carry out the full-duplex communication with the sink device enabled for full-duplex communication using the CEC line 84 and the reserved line 88 and the SDA line 191 and the SCL line 192.

As described above, carrying out the full-duplex communication based on the CEC line 84 and the reserved line 88 and the SDA line 191 and the SCL line 192 with the sink device by selecting the data to be transmitted and received by setting the switch 133, the switch 181, and the switch 182 allows high-speed bidirectional communication while maintaining the compatibility with the HDMI of the past.

If the sink device has the configuration shown in FIG. 15, the sink device carries out communication processing in the same manner as with the sink device shown in FIG. 14, thereby executing bidirectional communication with the source device.

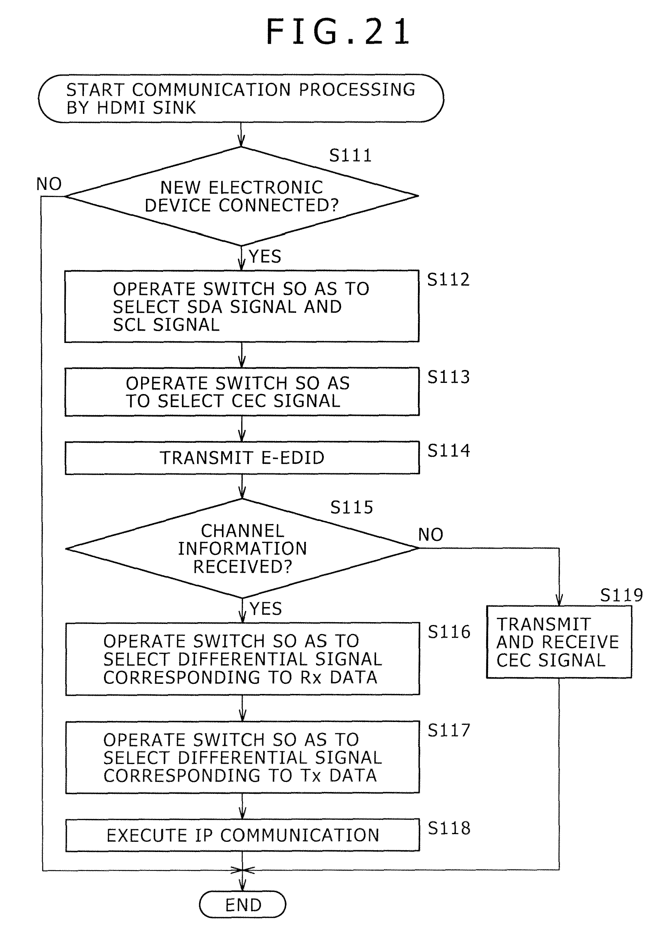

The following describes communication processing to be carried out by the sink device shown in FIG. 15 with reference to the flowchart shown in FIG. 21.

In step S111, the sink device determines whether a new electronic device (a source device) has been connected or not. If no new electronic device is found connected in step S111, no communication is carried out, upon which the communication processing comes to an end.

If a new electronic device is found connected in step S111, then the switching control unit 172 controls the switch 185 and the switch 186 in step S112 to select an SDA signal from the control section (CPU) of the sink device through the switch 185 at the time of data transmission and selects an SDA signal from the source device through the switch 185 and an SCL signal from the source device through the switch 186 at the time of data reception.

In step S113, the switching control unit 124 controls the switch 135 to select a CEC signal from the control section (CPU) of the sink device at the time of data transmission and a CEC signal from the source device at the time of data reception.

In step S114, the sink device reads E-EDID from the EDID ROM 85 and transmits the read E-EDID to the source device via the switch 185 and the SDA line 191 of the DDC 83.

In step S115, the sink device determines whether channel information transmitted from the source device has been received or not.

To be more specific, channel information indicative of a bidirectional communication channel is transmitted from the source device depending on the functions of the source device and the sink device. For example, if the source device has the configuration shown in FIG. 14, the source device and the sink device are enabled for the full-duplex communication. Hence, from the source device to the sink device, channel information is transmitted telling that the IP communication based on the CEC line 84 and the reserved line 88 and the SDA line 191 and the SCL line 192 is carried out. The sink device receives the channel information transmitted from the source device via the switch 135 and the CEC line 84, thereby determining that the channel information has been received.

In contrast, if the source device has no function of executing full-duplex communication, no channel information is transmitted from the source device to the sink device, so that the sink device determines that no channel information has been received.

If the channel information is found received in step S115, then the procedure goes to step S116, in which the switching control unit 172 controls the switch 185 and the switch 186 to select a differential signal corresponding to Rx data from the conversion unit 184 at the time of data transmission.

In step S117, the switching control unit 124 controls the switch 135 to select a differential signal corresponding to Tx data from the source device at the time of data reception.

In step S118, the sink device carries out bidirectional IP communication based on full-duplex communication, upon which the communication processing comes to an end. To be more specific, at the time of data transmission, the conversion unit 184 converts the Rx data supplied from the control section (CPU) of the sink device into a differential signal, supplies one of the part signals making up the differential signal obtained by this conversion to the switch 185, and supplies the other part signal to the control unit 186. The switch 185 and the control unit 186 transmit the part signals supplied from the conversion unit 184 to the source device via the SDA line 191 and the SCL line 192. Consequently, the differential signal corresponding to Rx data is transmitted from the sink device to the source device.

At the time of data reception, the decoding unit 136 receives the differential signal corresponding to Tx data transmitted from the source device. To be more specific, the switch 135 receives the part signal of the differential signal corresponding to Tx data transmitted from the source device via the CEC line 84 and supplies the received part signal to the decoding unit 136. The decoding unit 136 decodes the differential signal made up of the part signal supplied from the switch 135 and the part signal supplied from the source device via the reserved line 88 into the Tx data that is the original data and outputs the Tx data to the control section (CPU).

Consequently, the sink device transmits and receives various data, such as control data, pixel data, and audio data, with the source device.

If no channel information is found received in step S115, then the sink device transmits and receives CEC signals in step S119 to carry out bidirectional communication with the source device, upon which the communication processing comes to an end.

Thus, upon reception of the channel information, the sink device carries out full-duplex communication with the sink device by use of the CEC line 84 and the reserved line 88 and the SDA line 191 and the SCL line 192.

As described above, carrying out the full-duplex communication based on the CEC line 84 and the reserved line 88 and the SDA line 191 and the SCL line 192 with the source device by selecting the data to be transmitted and received by setting the switch 135, the switch 185, and the switch 186 allows high-speed bidirectional communication while maintaining the compatibility with the HDMI of the past.

It should be noted that, in the example shown in FIG. 15, the source device has the configuration in which the conversion unit 131 is connected to the CEC line 84 and the reserved line 88 and the decoding unit 183 is connected to the CEC line 84 and the reserved line 88; it is also practicable that the decoding unit 183 is connected to the CEC line 84 and the reserved line 88 and the conversion unit 131 is connected to the SDA line 191 and the SCL line 192.

In the above-mentioned case, the switch 181 and the switch 182 are connected to the CEC line 84 and the reserved line 88 and, at the same time, the decoding unit 183 and the switch 133 is connected to the SDA line 191 and, at the same time, the conversion unit 131.

Likewise, with the sink device shown in FIG. 15, the conversion unit 184 may be connected to the CEC line 84 and the reserved line 88 and the decoding unit 136 may be connected to the SDA line 191 and the SCL line 192. In this case, the switch 185 and the switch 186 are connected to the CEC line 84 and the reserved line 88 and, at the same time, the conversion unit 184 and the switch 135 is connected to the SDA line 191 and, at the same time, the decoding unit 136.

In addition, in FIG. 14, the CEC line 84 and the reserved line 88 may be the SDA line 191 and the SCL line 192. Namely, the conversion unit 131 and the decoding unit 132 of the source device and the conversion unit 134 and the decoding unit 136 of the sink device may be connected to the SDA line 191 and the SCL line 192, thereby providing the IP communication based on half-duplex communication between the source device and the sink device. Further, in this case, the reserved line 88 may be used to detect the connection of a new electronic device.

Further, each of the source device and the sink device may have both the functions of executing half-duplex communication and full-duplex communication. In this case, the source device and the sink device can execute the IP communication based on half-duplex communication or full-duplex communication in accordance with the communication functions of a connected electronic device.

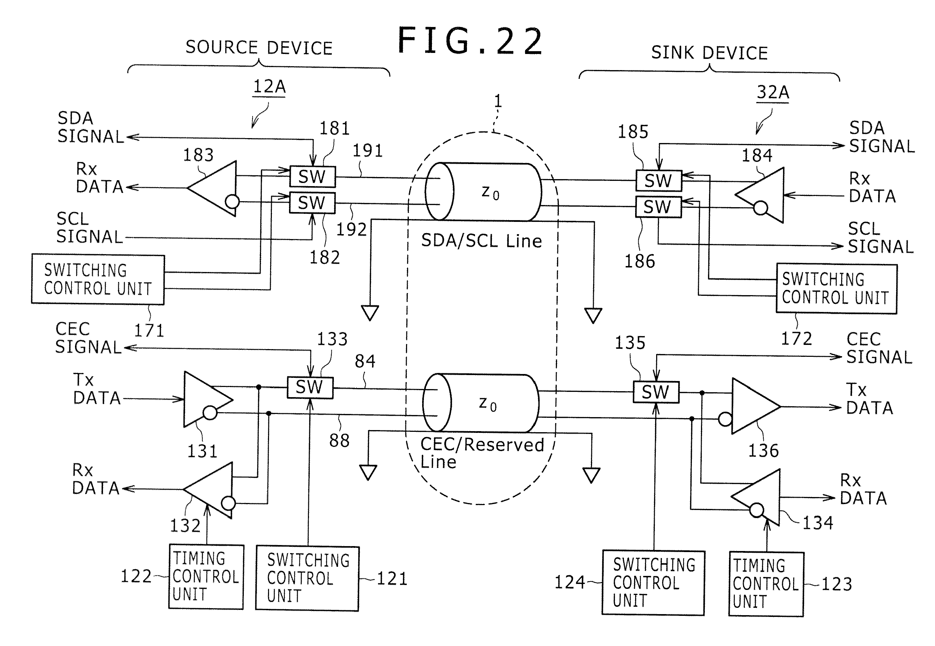

If each of the source device and the sink device has both the functions of executing half-duplex communication and full-duplex communication, the source device and the sink device are configured as shown in FIG. 22. It should be noted that, with reference to FIG. 22, components similar to those previously described with reference to FIGS. 14 and 15 are denoted by the same reference numerals and the description thereof will be omitted as appropriate.

A high-speed data line interface 12A has a conversion unit 131, a decoding unit 132, a switch 133, a switch 181, a switch 182, a decoding unit 183, a switching control unit 121, a timing control unit 122, and a switching control unit 171. Namely, the high-speed data line interface 12A in the source device shown in FIG. 22 has a configuration in which the timing control unit 122 and the decoding unit 132 shown in FIG. 14 are added to the configuration of the high-speed data line interface 12A in the source device shown in FIG. 15.

Also, the high-speed data line interface 12A that is a source device shown in FIG. 22 has a conversion unit 134, a switch 135, a decoding unit 136, a conversion unit 184, a switch 185, a switch 186, a timing control unit 123, a switching control unit 124, and a switching control unit 172. Namely, the sink device shown in FIG. 22 has a configuration in which the timing control unit 123 and the conversion unit 134 shown in FIG. 14 are added to the sink device shown in FIG. 15.

The following describes communication processing that is carried out by the source device and the sink device shown in FIG. 22.

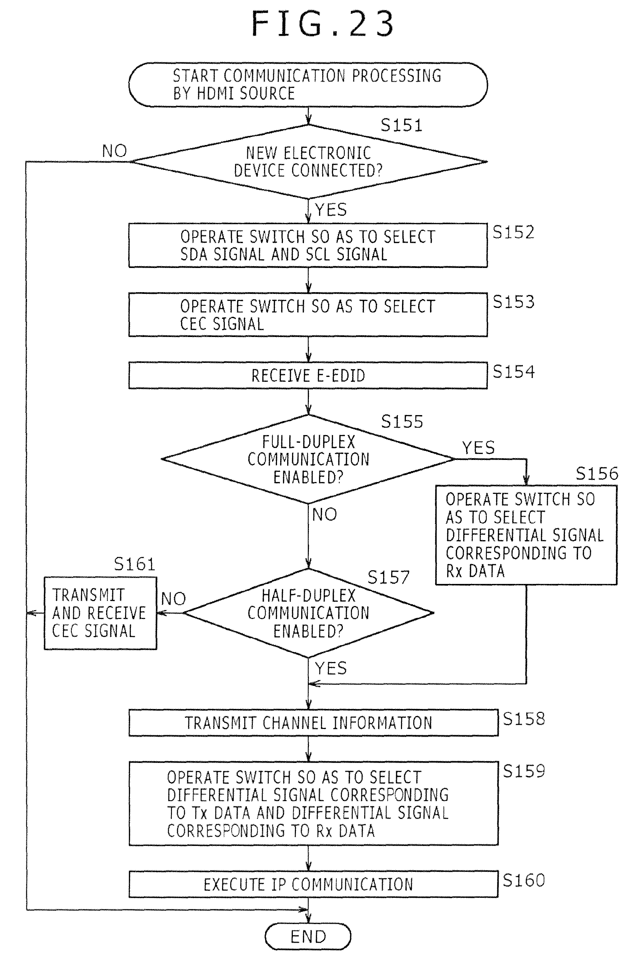

First, communication processing to be executed by the source device shown in FIG. 22 with reference to the flowchart shown in FIG. 23. It should be noted that processes of steps S151 through S154 are substantially the same as those of steps S71 through S74 in FIG. 20 and therefore description thereof will be omitted.

In step S155, the source device determines whether full-duplex communication is enabled with the sink device. Namely, the source device references E-EDID received from the sink device to determine whether full-duplex flag "Full Duplex" shown in FIG. 17 is set or not.

If full-duplex communication is found enabled in step S155, namely, if the sink device shown in FIG. 22 or 15 is connected to the source device, then the switching control unit 171 controls the switch 181 and the switch 182 in step S156 to select a differential signal corresponding to Rx data from the sink device at the time of data reception.

On the other hand, if full-duplex communication is found not enabled in step S155, then the source device determines in step S157 whether half-duplex communication is enabled or not. To be more specific, the source device references the received E-EDID to determine whether half-duplex flag "Half Duplex" shown in FIG. 17 is set or not. In other words, the source device determines whether the sink device shown in FIG. 14 is connected to the source device.

If half-duplex communication is found enabled in step S157 or if the switch 181 and the switch 182 have been switched in step S156, then the source device transmits channel information to the sink device via the switch 133 and the CEC line 84 in step S158.

If full-duplex communication is found enabled in step S155, it indicates that the sink device has the function of executing full-duplex communication, so that the source device transmits, as channel information, a signal telling that IP communication using the CEC line 84, the reserved line 88 and the SDA line 191 and the SCL line 192 is carried out to the sink device via the switch 133 and the CEC line 84.

If half-duplex communication is found enabled in step S157, it indicates that the sink device does not have the function of carrying out full-duplex communication but has the function of carrying out half-duplex communication, so that the source device transmits a signal telling that IP communication using the CEC line 84 and the reserved line 88 is carried out to the sink device via the switch 133 and the CEC line 84.

In step S159, the switching control unit 121 controls the switch 133 to select a differential signal corresponding to Tx data from the conversion unit 131 at the time of data transmission and select a differential signal corresponding to Rx data transmitted from the sink device at the time of data reception. It should be noted that, if the source device and the sink device carry out full-duplex communication, the differential signal corresponding to Rx data is not transmitted from the sink device via the CEC line 84 and the reserved line 88 at the time of data reception on the source device, so that the differential signal corresponding to Rx signal is not supplied to the decoding unit 132.

In step S160, the source device carries out bidirectional IP communication with the sink device, upon which the communication processing comes to an end.

Namely, if the source device carries out full-duplex communication with the sink device and the source device carries out a half-duplex communication, then, at the time of data transmission, the conversion unit 131 converts the Tx data supplied from the control section (CPU) of the source device into a differential signal, transmits one of the part signals making up the differential signal obtained by the conversion to the sink device via the switch 133 and the CEC line 84, and transmits the other part signal to the sink device via the reserved line 88.

If the source device carries out full-duplex communication with the sink device, the decoding unit 183 receives, at the time of data reception, a differential signal corresponding to Rx data transmitted from the sink device and decodes the received differential signal into Rx data that is the original data, outputting the Rx data to the control section (CPU).

If the source device carries out half-duplex communication with the sink device, the decoding unit 132 receives a differential signal corresponding to Rx data transmitted from the sink device under the control of the timing control unit 122 at the time of data reception and decodes the received differential signal into Rx data that is the original data, outputting the Rx data to the control section (CPU).

Consequently, the source device transmits and receives various data, such as control data, pixel data, and audio data, with the sink device.

If half-duplex communication is found not enabled in step S157, then the source device transmits and receives CEC signals via the CEC line 84 in step S161 to carry out bidirectional communication with the sink device, upon which the communication processing comes to an end.

Thus, the source device refers to the full-duplex flag and the half-duplex flag to carry out full-duplex communication or half-duplex communication in accordance with the communication functions of the sink device with which communication is carried out.

Thus, in accordance with the communication functions of the sink device that is the other device of communication, the data to be transmitted and the data to be received are selected by switching the switch 133, the switch 181, and the switch 182 to carry out full-duplex communication or half-duplex communication, thereby allowing the selection of the more optimum communication method to carry out high-speed bidirectional communication while maintaining the compatibility with the HDMI of the past.

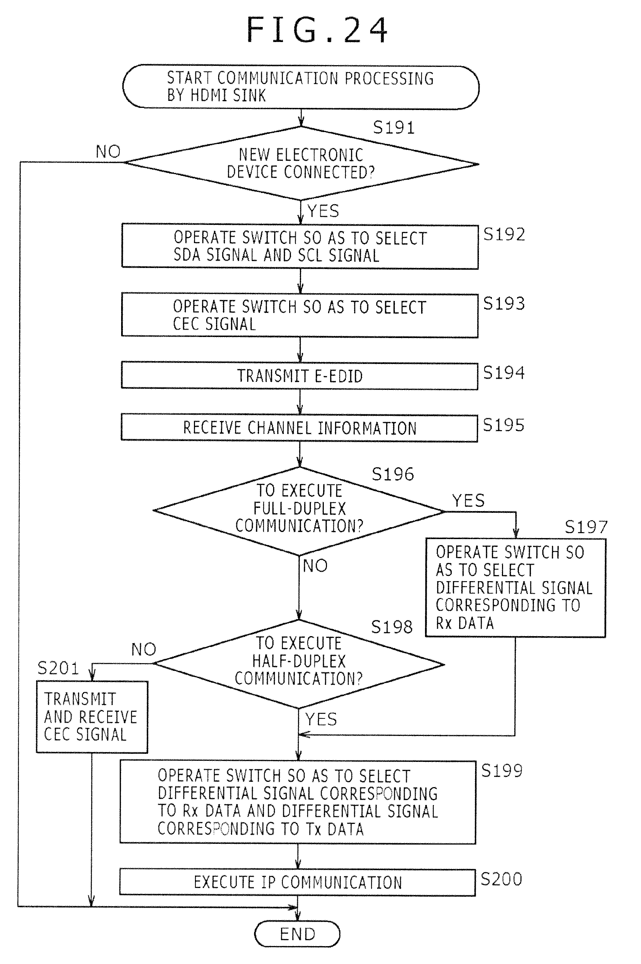

The following describes communication processing that is carried out by the sink device shown in FIG. 22 with reference to the flowchart shown in FIG. 24. It should be noted that processes of steps S191 through S194 shown in FIG. 22 are substantially the same as those of steps S111 through S114 shown in FIG. 21, so that the description thereof will be omitted.

In step S195, the sink device receives channel information transmitted from the source device via the switch 135 and the CEC line 84. It should be noted that the source device connected to the sink device has none of the full-duplex communication function and the half-duplex communication function, no channel information is transmitted from the source device to the sink device, so that the sink device does not receive channel information.

In step S196, the sink device determines on the basis of the received channel information whether to carry out full-duplex communication or not. For example, if the sink device receives channel information telling that IP communication using the CEC line 84 and the reserved line 88 and the SDA line 191 and the SCL line 192 is carried out, the sink device determines that full-duplex communication is carried out.

If full-duplex communication is found to be carried out in step S196, then the switching control unit 172 controls the switch 185 and the switch 186 in step S197 to select a differential signal corresponding to Rx data transmitted from the conversion unit 184 at the time of data reception, thereby switching the switch 185 and the switch 186.

If full-duplex communication is found not to be carried out in step S196, then the sink device determines in step S198 on the basis of the received channel information whether to carry out half-duplex communication or not. For example, if the sink device receives channel information telling that IP communication using the CEC line 84 and the reserved line 88 is executed, the sink device determines that half-duplex communication is executed.

If half-duplex communication is found in step S198 to be carried out or if the switch 185 and the switch 186 are switched in step S197, then the switching control unit 124 controls the switch 135 in step S199 to select a differential signal corresponding to Rx data from the conversion unit 134 at the time of data transmission and select a differential signal corresponding to Tx data from the source device at the time of data reception.

It should be noted that, when the source device and the sink device carry out full-duplex communication, no differential signal corresponding to Rx data is not transmitted from the conversion unit 134 to the transmitter 81 at the time of data transmission on the sink device, so that no differential signal corresponding to Rx data is supplied to the switch 135.

In step S200, the sink device carries out bidirectional IP communication with the source device, upon which the communication processing comes to an end.

To be more specific, when the sink device carries out full-duplex communication with the source device, the conversion unit 184 converts Rx data supplied from the control section (CPU) of the sink device into a differential signal at the time of data transmission, transmits one of the part signal making up the differential signal to the source device via the switch 185 and the SDA line 191, and transmits the other part signal to the source device via the switch 186 and the SCL line 192.

If the sink device carries out half-duplex communication with the source device, the conversion unit 134 converts Rx data supplied from the control section (CPU) of the sink device into a differential signal, transmits one of the part signals making up the differential signal to the transmitter 81 via the switch 135 and the CEC line 84, and transmits the other part signal to the source device via the reserved line 88.

Further, when the sink device carries out full-duplex communication and half-duplex communication with the source device, the decoding unit 136 receives a differential signal corresponding to Tx data transmitted from the source device at the time of data reception and decodes the received differential signal into Tx data that is the original data, outputting the Tx data to the control section (CPU).

If half-duplex communication is found not to be executed in step S198, namely, if no channel information is transmitted, then the sink device executes bidirectional communication with the source device in step S201 by transmitting and receiving CEC signals, upon which the communication processing comes to an end.

Thus, the sink device carries out full-duplex communication or half-duplex communication in accordance with the communication capability of the source device that is the other device of communication in accordance with the received channel information.

As described above, carrying out the full-duplex communication or half-duplex communication by selecting data to be transmitted and data to be received by switching the switch 135, the switch 185, and the switch 186 in accordance with the communication functions of the source device that is the other device of communication allows high-speed bidirectional communication by selecting the more optimum communication method while maintaining the compatibility with the HDMI of the past.

Also, interconnecting the source device and the sink device with an HDMI cable 1 containing the CEC line 84 and the reserved line 88 mutually differential twisted pair connected and shielded and connected to the ground line and the SDA line 191 and the SCL line 192 mutually differential twisted pair connected and shielded and connected to the ground line allows the high-speed bidirectional IP communication based on half-duplex communication or full-duplex communication while maintaining the compatibility with the HDMI cable of the past.

The above-mentioned sequence of processing operations may be executed by software as well as dedicated hardware. When the above-mentioned sequence of processing operations is executed by software, the programs constituting the software are installed in a microcomputer or the like that controls each of the source device and the sink device, for example.

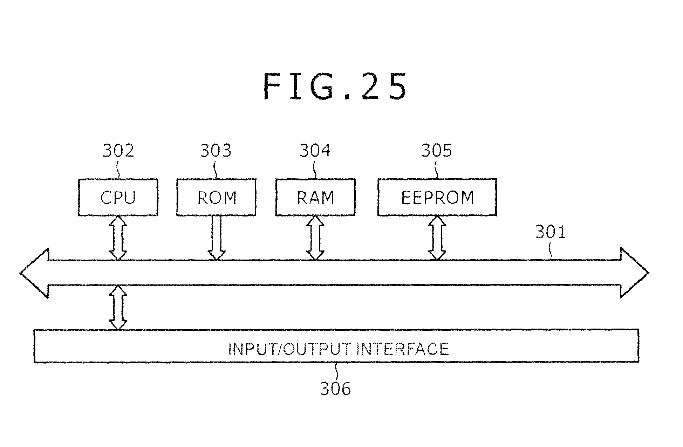

Now, FIG. 25 shows an exemplary configuration of a computer practiced as one embodiment of the invention on which a program for executing the above-mentioned series of processing operations is installed.

The above-mentioned program can be stored in an EEPROM (Electrically Erasable Programmable Read-Only Memory) 305 or a ROM 303 in advance that provides a recording media built in the computer.

Alternatively, the above-mentioned program can be stored (or recorded) in any of removable recording media, such as a flexible disc, a CD-ROM (Compact Disc Read Only Memory), an MO (Magneto Optical) disc, a DVD (Digital Versatile Disc), a magnetic disc, and a semiconductor memory in a temporary or permanent manner. This removable recording media can be provided as so-called packaged software.

It should be noted that that, in addition to the installation from removable recording media such as mentioned above into a computer, programs may be downloaded from a download site into a computer in a wireless manner or via a network such as LAN (Local Area Network) or the Internet in a wired manner. The computer can receive, by an input/output interface 306, the program transmitted as above and installed the received program into the incorporated EEPROM 305.

The computer incorporates a CPU (Central Processing Unit) 302. The CPU 302 is connected with the input/output interface 306 via a bus 301. The CPU 302 loads the program from the ROM 303 or the EEPROM 305 into a RAM (Random Access Memory) 304 for execution. Consequently, the CPU 302 executes the processing specified by the above-mentioned flowcharts or the processing to be executed by the configurations described in the above-mentioned block diagrams.

It should be noted herein that the steps for describing each program recorded in recording media include not only the processing operations which are sequentially executed in a time-dependent manner but also the processing operations which are executed concurrently or discretely. It should also be noted that the program may be one that is executed by one unit of computer or by two or more units of computer in a distributed processing manner.

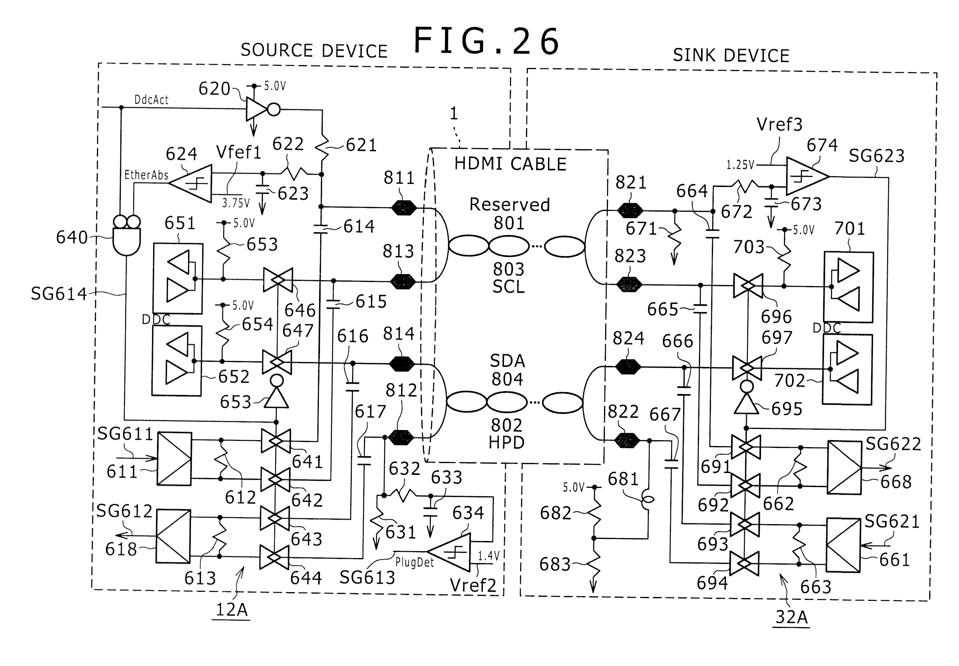

The above-mentioned exemplary configuration shown in FIG. 8 allows the forming of a circuit for LAN communication regardless of the electrical specifications defined with respect to DDC. It should be noted that FIG. 26 shows another configuration that provides substantially the same effects as the configuration shown in FIG. 8.

With the exemplary configuration, in an interface for executing video and audio data transmission, exchange and authentication of connected device information, device control data communication, and LAN communication by one cable, the LAN communication is executed unidirectionally via two pairs of differential transmission paths and the status of interface connection is notified by the DC bias potential of at least one of the transmission paths. At the same time, in this interface, at least two transmission paths are used for the exchange and authentication of connected device information in a time division manner with the LAN communication.

A source device has a LAN signal transmission circuit 611, terminal resistors 612, 613, AC coupling capacitors 614 through 617, a LAN signal reception circuit 618, an inverter 620, a resistor 621, a resistor 622 and a capacitor 623 that form a lowpass filter, a comparator 624, a pulldown resistor 631, a resistor 632 and a capacitor 633 that form a lowpass filter, a comparator 634, a NOR gate 640, analog switches 641 through 644, an inverter 645, analog switches 646, 747, DDC transceivers 651, 652, and pullup resistors 653, 654.

A sink device 602 has a LAN signal transmission circuit 661, terminal resistors 662, 663, AC coupling capacitors 664 through 667, a LAN signal reception circuit 668, a pulldown resistor 671, a resistor 672 and capacitor 673 that form a lowpass filter, a comparator 674, a choke coil 681, resistors 682, 683 series connected between power supply potential and reference potential, analog switches 691 through 694, an inverter 695, analog switches 696, 697, DDC transceivers 701, 702, and pullup resistors 703, 704.

The HDMI cable 1 contains a differential transmission path composed of a reserved line 801 and an SCL line 803 and a differential transmission path composed of an SDA line 804 and an HPD line 802 and source-side terminals 811 through 814 and sink-side terminals 821 through 824 of these differential transmission paths are formed.

The reserved line 801 and the SCL line 803 are connected as a differential twisted pair and the SDA line 804 and the HPD line 802 are connected as a differential twisted pair.

In the source device, the terminals 811 and 813 are connected to the transmission circuit 611 for transmitting a LAN transmission signal SG611 to the sink and the terminal resistor 612 via the AC coupling capacitors 614, 605 and analog switches 641, 642, respectively. The terminals 814 and 814 are connected to the reception circuit 618 for receiving a LAN signal from the sink device and the terminal resistor 613 via the AC coupling capacitors 616, 617 and the analog switches 643, 644, respectively.

In the sink device, the terminals 821 through 824 are connected to the transmission circuit 661 and the reception circuit 668 and the terminal resistors 662, 663 via the AC coupling capacitors 664, 665, 666, 667 and the analog switches 691 through 694, respectively. The analog switches 641 through 644, 691 through 694 conduct when LAN communication is carried out and open when DDC communication is carried out.

The source device connects the terminal 813 and the terminal 814 to the DDC transceivers 651, 652 and the pullup resistors 653, 654 via other analog switches 646, 647, respectively.

The sink device connects the terminal 823 and the terminal 824 to the DDC transceivers 791, 702 and the pullup resistor 703 via the analog switches 696, 697. The analog switches 646, 647 conduct when DDC communication is carried out and open when LAN communication is carried out.

A mechanism for recognizing e-HDMI compliant devices by means of the potential of the reserved line 801 is basically the same as the mechanism illustrated in FIG. 8 except the resistor 62 of the source device 601 is driven by the inverter 620.

When the input of the inverter 620 is High, the resistor 621 becomes a pulldown resistor, so that, when viewed from the sink device, the source device gets in the same 0 V status as when an e-HDMI non-compliant device is connected. As a result, signal SG623 indicative of an e-HDMI compliance identification result of the sink device goes Low, upon which the analog switches 691 through 694 controlled by the signal SG623 are opened and the analog switches 696, 697 controlled by a signal obtained by inverting the signal SG623 by the inverter 695 conduct. Consequently, the sink device 602 disconnects the SCL line 803 and the SDA line 804 from the LAN transceiver, connecting to the DDC transceiver.

On the other hand, in the source device, the input of the inverter 620 is also entered in a NOR gate 640 and output SG614 thereof goes Low. Analog switches 641 through 644 controlled by output signal SG614 of the NOR gate 640 are opened and analog switches 646, 647 controlled by a signal obtained by inverting signal SG614 by the inverter 645 conduct. As a result, the source device 601 also disconnects the SCL line 803 and the SDA line 804 from the LAN transceiver, connecting to the DDC transceiver.

Conversely, when the input of the inverter 620 is Low, then both the source device and the sink device disconnect the SCL line 803 and the SDA line 804 from the DDC transceiver, connected to the LAN transceiver.

Circuits 631 through 634, 681 through 683 for the confirmation of connection by the DC bias potential of the HPD line 802 have substantially the same functions as the example shown in FIG. 8. To be more specific, the HPD line 802 transmits, to the source device, information indicative that the cable 1 has been connected to the sink device at DC bias level in addition to the above-mentioned LAN communication. The resistors 682, 683 and the choke coil 681 in the sink device bias the HPD line 802 to approximately 4 V via the terminal 822 when the cable 1 is connected to the sink device.

The source device extracts the DC bias of the HPD line 802 by a lowpass filter composed of the resistor 632 and the capacitor 633 and compares the extracted DC bias with reference potential Vref2 (1.4 V for example) by the comparator 634. If the cable 1 is not connected to the sink device, the potential of the terminal 812 is lower than reference potential Vref2 by the pulldown resistor 631; if the cable 1 is connected to the sink device, this potential is higher than reference potential. Therefore, if output signal SG613 of the comparator 634 is High, it indicates that the cable 1 is connected to the sink device. On the other hand, if the output signal SG613 of the comparator 634 is Low, it indicates that the cable 1 is not connected to the sink device.

As described above and according to the exemplary configuration shown in FIG. 26, in an interface where the transmission of video and audio data, the exchange and authentication of connected device information, the communication of device control data, and LAN communication are carried out with one cable, the LAN communication is executed in unidirectional communication via two pairs of differential transmission paths, an interface connection status is notified by the DC bias potential of at least one of these transmission paths, and at least two transmission paths are used for the communication of the exchange and authentication of connected device information in a time division manner with LAN communication. Consequently, this novel configuration allows the execution of time division processing for providing a time zone in which the SCL line and the SDA line are connected to the LAN communication circuit and a time zone in which the SCL line and the SDA line are connected to the DDC circuit. This time division can form a circuit for LAN communication regardless of the electrical specifications defined for DDC, thereby realizing a stabilized, certain, and low-cost LAN communication.

It should be noted that SDA and SCL execute communication with H being 1.5 KΩ pullup and L being low impedance and CEC also executes communication with H being 27 KΩ pullup and L being low impedance. In order to maintain the compatibility with the existing HDMI, holding these functions may make it difficult to share the LAN function for high-speed data communication that requires the matched termination of each transmission path.

The exemplary configurations shown in FIGS. 8 and 26 can avoid these problems. To be more specific, in the exemplary configuration shown in FIG. 8, instead of using the SDA, SCL, and CEC lines, full-duplex communication is executed based on one-pair bidirectional communication with the reserved line and the HPD line made a differential pair. In the exemplary configuration shown in FIG. 26, two-pair full-duplex communication is executed based on unidirectional communication by making two differential pairs with the HPD line and the SDA line and with the SCL line and the reserved line.

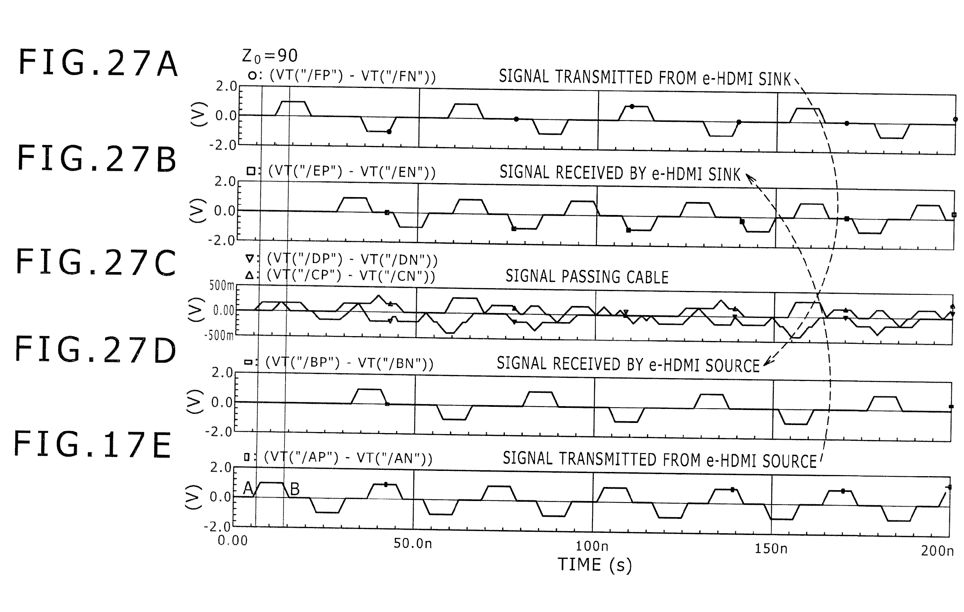

FIGS. 27(A) through (E) illustrate bidirectional communication waveforms in the exemplary configuration shown in FIG. 8 or FIG. 26.

FIG. 27(A) shows a signal waveform transmitted from the source device; FIG.27(B) shows a signal waveform received by the sink device; FIG. 27(C) shows a signal waveform that passes through the cable; FIG. 27(D) shows a signal waveform received by the source device; and FIG. 27(E) shows a signal waveform transmitted from the source device. As seen from these figures, according to the exemplary configuration shown in FIG. 8 or FIG. 26, good bidirectional communication can be realized.

It should be noted that, in the above-mentioned embodiments, the description was made by assuming the interface based on the HDMI standard as a transmission path connecting a personal computer (source apparatus) with a television receiver (sink apparatus); it is also practicable to apply the embodiments to other similar transmission standards. Further, the above-mentioned examples use the personal computer 10 for the source apparatus and the television receiver 30 for the sink apparatus; it is also practicable to apply the present invention to any AV systems configured by use of other transmitting apparatuses and display apparatuses.

In addition, in the above-mentioned embodiments, no tuner is installed on the personal computer 10; it is also practicable to apply the present invention to the case in which the personal computer 10 is installed with a tuner. In this case, the personal computer 10 is able to execute the processing or operation equal to the case in which two or more tuners are arranged.

Further, in the above-mentioned embodiments, bidirectional IP communication is executed between the source apparatus and the sink apparatus; it is practicable to execute bidirectional communication by other protocols than IP. Also, in the above-mentioned embodiments, electronic apparatus are interconnected by HDMI cables; it is also likewise practicable to interconnect electronic apparatus in a wireless manner.

### Industrial Applicability

The present invention allows transmission apparatuses to effectively use a broadcast reception section (tuner) of display apparatuses and is applicable to AV systems and the like in which a television receiver is connected with a personal computer with an HDMI cable, for example.

## Claims

1. A display apparatus comprising:
a signal receiving section configured to receive a video signal via a transmission path based on a differential signal over a plurality of channels;
a broadcast reception section configured to process a television broadcast signal to obtain stream data of a predetermined program;
an image display section configured to process the video signal received by said signal receiving section or the stream data obtained by said broadcast reception section to display an image;
a communication section configured to execute bidirectional communication by use of a predetermined line consisting said transmission path; and
a data transmitting section configured to transmit said stream data obtained by said broadcast reception section from said communication section to said external device.

2. The display apparatus according to claim 1, further comprising:
a command transmitting section configured to transmit a recording start command to said external device,
said data transmitting section transmitting said stream data obtained by said broadcast reception section to said external device through said communication section after transmitting a recording start command from said command transmitting section to said external section.

3. The display apparatus according to claim 2, further comprising:
a user operation section,
said command transmitting section transmitting a recording start command to said external device when a recording instruction is given from said user operation section.

4. The display apparatus according to claim 1, further comprising:
a request signal receiving section configured to receive a request signal transmitted from said external device; and
an alert display section configured to, if a request signal received by said request signal receiving section is a request signal for requesting a use of said broadcast reception section, display an alert associated with said use.

5. The display apparatus according to claim 1, further comprising:
a request signal receiving section configured to received a request signal transmitted from said external device; and
a reception control section configured, if a request signal received by said request signal receiving section is a request signal for requesting channel setting of said broadcast reception section, to switch between receiving channels of said broadcast reception section on the basis of said request signal.

6. The display apparatus according to claim 1, comprising:
a request signal receiving section configured to receive a request signal transmitted from said external device; and,
if a request signal received by said request signal receiving section is a request signal for requesting the transmission of stream data, said data transmitting section transmitting stream data obtained in said broadcast reception section to said external device through said communication section.

7. A data transmitting method for a display apparatus having a signal receiving section configured to receive a video signal via a transmission path based on a differential signal over a plurality of channels,
a broadcast reception section configured to process a television broadcast signal to obtain stream data of a predetermined program, and
an image display section configured to process the video signal received by said signal receiving section or the stream data obtained by said broadcast reception section to display an image, said data transmitting method transmitting stream data obtained in said broadcast reception section to said external device, comprising the step of:
transmitting, by arranging a communication section for executing bidirectional communication by use of a predetermined line consisting said transmission path, stream data obtained in said broadcast reception section through said communication section.

8. A transmission apparatus comprising:
a signal transmitting section configured to transmit a video signal to an external device via a transmission path based on a differential signal over a plurality of channels;
a video signal acquiring/creating section configured to acquire a video signal transmitted from said signal transmitting section or create a video signal;
a communication section configured to execute bidirectional communication by use of a predetermined line configuring said transmission path; and
a signal receiving section configured to receive stream data obtained in a broadcast reception section of said external device from said external device through said communication section.

9. The transmission apparatus according to claim 8, further comprising:
a data recording section configured to record stream data,
said data recording section recording stream data received by said signal receiving section.

10. The transmission apparatus according to claim 9, further comprising:
a command receiving section configured to receive a recording start command transmitted from said external device,
said data recording section starting recording stream data received by said signal receiving section when said recording start command is received by said command receiving section.

11. The transmission apparatus according to claim 8, further comprising:
a request signal transmitting section configured to transmit a request signal to said external device,
said request signal being a request signal for requesting a use of a broadcast reception section of said external device.

12. The transmission apparatus according to claim 8, further comprising:
a request signal transmitting section configured to transmit a request signal to said external device,
said request signal being a request signal for requesting channel setting of a broadcast reception section of said external device.

13. The transmission apparatus according to claim 8, further comprising:
a request signal transmitting section configured to transmit a request signal to said external device,
said request signal being a request signal for requesting the transmission of stream data obtained in a broadcast reception section of said external device.

14. The transmission apparatus according to claim 8, further comprising:
a signal processing section configured to synthesize a video signal obtained by decoding stream data received by said signal receiving section with a video signal acquired or created by said video signal acquiring/creating section, thereby generating a video signal to be transmitted by said signal transmitting section.

15. A data receiving method for a transmission apparatus having a signal transmitting section configured to transmit a video signal to an external device via a transmission path based on a differential signal over a plurality of channels and
a video signal acquiring/creating section configured to acquire a video signal transmitted from said signal transmitting section or create a video signal, said data receiving method receiving stream data obtained in a broadcast reception section of said external device, said data receiving method comprising the step of:
receiving stream data from said external device through said communication section by arranging a communication section for executing bidirectional communication by use of a predetermined line configuring said transmission path.
